# EUROPEAN PATENT APPLICATION

(11) **EP 1 319 639 A2**
(43) Date of publication of application: **18.06.2003**
(21) Application number: 03004680.9
(22) Date of filing: 26.03.1999
(51) Int. Cl.: C04B 38/00

(54) **Chemical control over ceramic porosity using carboxylate-alumoxanes**

(30) Priority: 30.03.1998 US 79926 P
(62) Divisional of application: 99914011.4
(71) Applicant: William Marsh Rice University, Houston, TX 77005 (US)
(72) Inventor: The designation of the inventor has not yet been filed
(74) Representative: Schwan - Schwan - Schorer

(57) **Abstract**

This invention relates generally to a method for controlling the pore size, pore size distribution and porosity of aluminum-oxide based ceramics through the choice of substituents on carboxylate-alumoxanes and aluminum-oxide nanoparticles The method allows for the formation of intra-granular pores in the nanometer range to be created in alumina and aluminum oxide ceramic bodies. The control over pore size and pore size distribution is accomplished through the use of different chemical substituents on the carboxylate-alumoxanes and aluminum-oxide nanoparticles. The size and distribution of pores within the alumina-oxide ceramic are dependent on the identity of the carboxylate substituents. In particular the formation of intra-versus inter-granular porosity is dependent on the identity of the carboxylate substituents.

## Description

### BACKGROUND OF THE INVENTION

### Field of the Invention

The present invention relates generally to compositions of matter and methods for synthesizing a composition of matter including controlling the pore size, pore size distribution and porosity of aluminum-oxide based ceramics through the choice of substituents on carboxylate-alumoxanes and aluminum-oxide nanoparticles. The invention includes aluminum and aluminum oxide ceramic bodies with infra-granular pores in the nanometer range and methods for forming intra-granular pores in the nanometer range in alumina and aluminum oxide ceramic bodies. The invention provides for the control over pore size and pore size distribution by the use of chemical substituents on the carboxylate-alumoxanes and aluminum-oxide nanoparticles. The invention also includes the use of controlled-porosity ceramics for ceramic membrane filters and coatings and interphase layers for fibers and fiber reinforced composites.

### Description of the Related Art

The oxides and hydroxides of aluminum are undoubtedly among the most industrially important chemicals. Their uses include: precursors for the production of aluminum metal, catalysts and absorbents; structural ceramic materials; reinforcing agents for plastics and rubbers, antacids and binders for the pharmaceutical industry; and as low dielectric loss insulators in the electronics industry. Traditional ceramic processing involves three basic steps generally referred to as powder-processing, shape-forming, and densification, often with a final mechanical finishing step (Kingery et al. 1976 and Richerson 1992). Whereas traditional sintering process are primarily for the manufacture of dense parts, solution-gelation processes have been applied industrially used for the production of porous materials and coatings. Solution-gelation involves a four stage process: dispersion; gelation; drying; and firing. A stable liquid dispersion or *sol* of the colloidal ceramic precursor is initially formed in a solvent with appropriate additives. By change in the concentration (aging) or the pH, the dispersion is polymerized to form a solid dispersion or *gel.* The excess liquid is removed from this gel by drying, and the final ceramic is formed by firing the gel at higher temperatures. The common solution-gelation route to aluminum oxides employs aluminum hydroxide (or hydroxide-based material) as the solid colloid, with the second phase being water and/or an organic solvent. Aluminum hydroxide gels have traditionally been prepared by the neutralization of a concentrated aluminum salt solution (Serna et al. 1977), however, the strong interactions of the freshly precipitated alumina gels with ions from the precursor solutions makes it difficult to prepare these gels in pure form (Green and Hem 1974). To avoid this complication alumina gels may be prepared from the hydrolysis of aluminum alkoxides, Al(OR)₃ (Eq. 1).

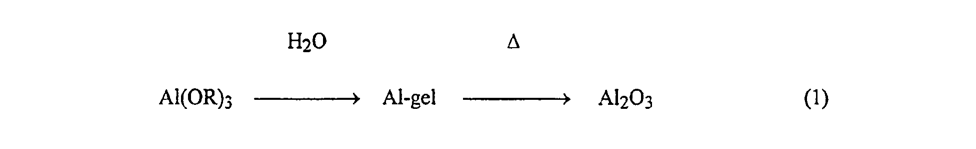

Although this method was originally reported by Adkins in 1922, it was not until Teichmer et al. (1976) reported the preparation of alumina aerogels, and Yoldas (1975) showed that transparent ceramic bodies can be obtained by the pyrolysis of suitable alumina gels, that interest increased significantly. Other pertinent references include: Nogami (1994), Low et al. (1997), Nikolic and Radonjic (1997), Rezgui and Gates (1997), Rezgui et al. (1994). The exact composition of the gel in commercial systems is ordinarily proprietary, however, a typical composition will include an aluminum compound, a mineral acid and a complexing agent to inhibit premature precipitation of the gel. The aluminum compound has traditionally been the direct precursor to pseudo-boehmite. 2

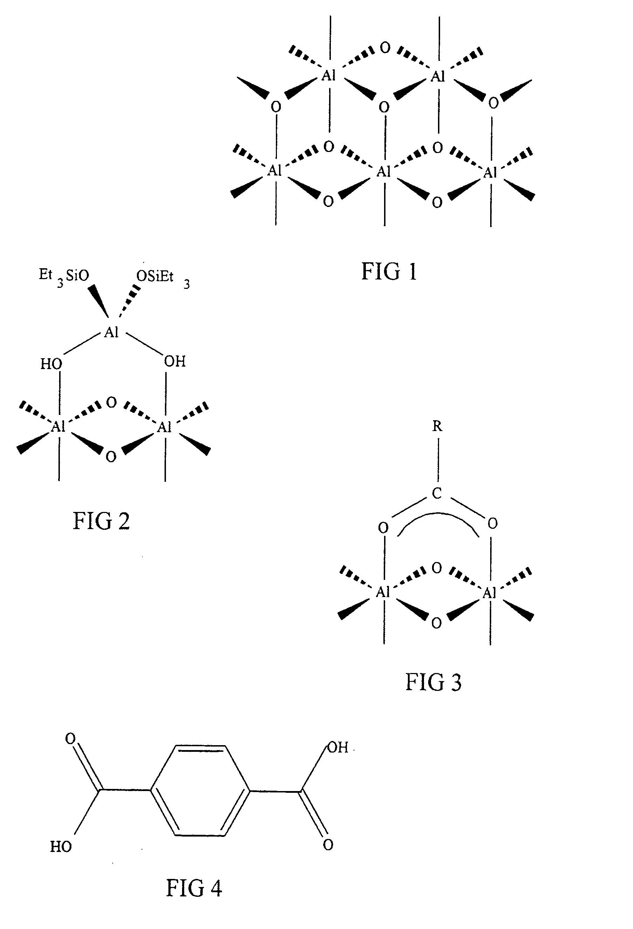

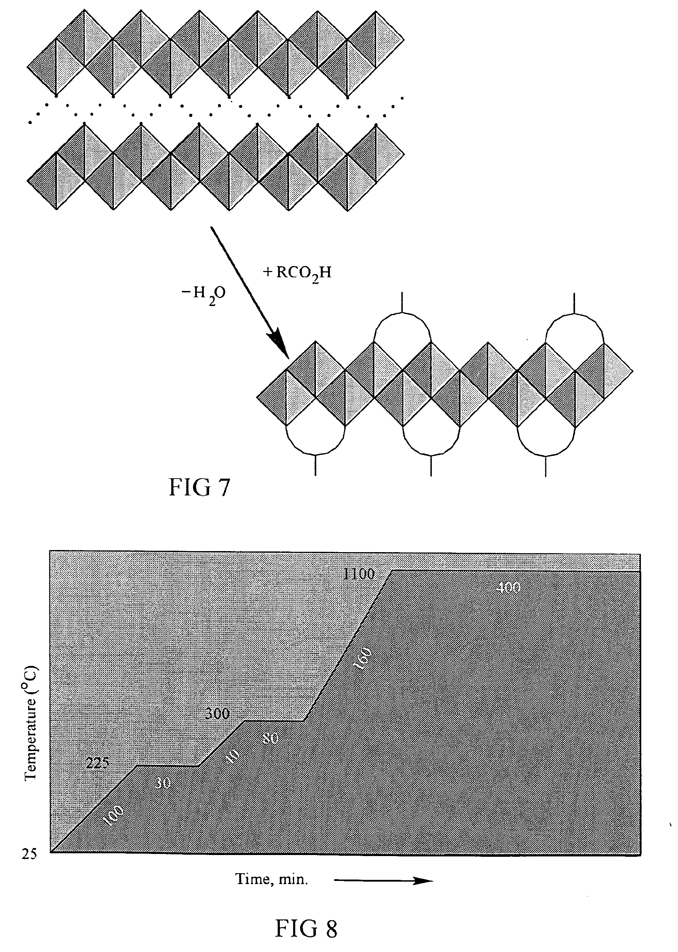

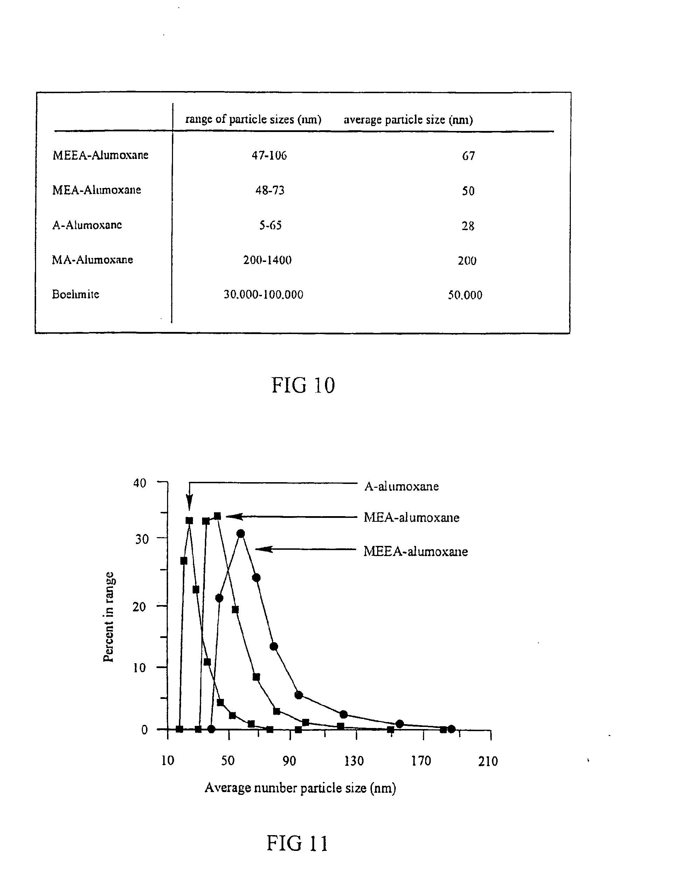

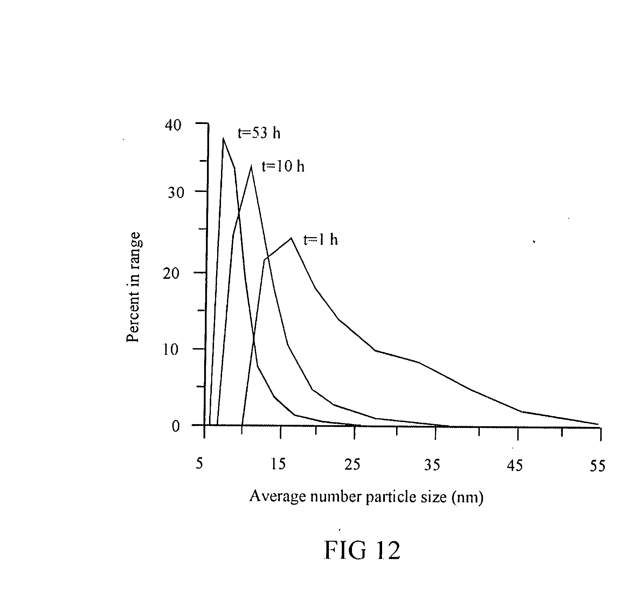

The aluminum based sol-gels formed during the hydrolysis of aluminum compounds belong to a general class of compounds, namely alumoxanes. These materials were first reported in 1958 (Andrianov and Zhadanov, 1958) with siloxide substituents, however, they have since been prepared with a wide variety of substituents on aluminum. Recent work has shown that the structure of alumoxanes is as three dimensional cage compounds (Apblett et al. 1992 and Landry et al. 1993). For example, siloxy-alurnoxanes, [Al(O)(OH)ₓ(OSiR₃)₁₋ₓ]ₙ, consist of an aluminum-oxygen core structure (Figure 1) analogous to that found in the mineral boehmite, [Al(O)(OH)]ₙ, with a siloxide substituents. In the siloxy-alumoxanes, the "organic" is typically like that shown in Figure 2. However, the carboxylate anion, [RCO₂]⁻, is an isoelectronic and structural analog of the organic portion found in the siloxy-alumoxanes (Figure 3). Based upon this approach the reaction of boehmite, [Al(O)(OH)]ₙ, with carboxylic acids, has been developed (Landry et al. 1995) or Eq. 2. 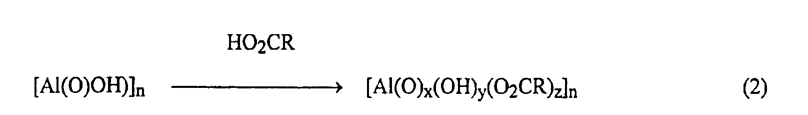 Carboxylate-substituted alumoxanes have been well characterized (Landry et al. 1995 and Callender et al. 1997). Solution particle-size measurements shows that carboxylate-alumoxanes are nano-particles with sizes ordinarily ranging from 1 - 1000 nm (Figure 10, 11 and 12). Nanoparticles are ordinarily defined as materials with sizes ranging from 1 nm to 1 µm. The carboxylate ligand is bound to the aluminum surface, and is only removed under extreme conditions. The carboxylate-alumoxane materials prepared from the reaction of boehmite and carboxylic acids are air and water stable materials and are easily processable (Figure 7). The soluble carboxylate-alumoxanes can be dip-coated, spin coated, and spray-coated onto various substrates. The physical properties of these alumoxanes are highly dependent on the identity of the alkyl substituents, R, and range from those associated with insoluble crystalline powders to powders that readily form solutions or gels in hydrocarbon solvents and/or water. These alumoxanes are indefinitely stable under ambient conditions, and are adaptable to a wide range of processing techniques. The alumoxanes can be easily converted to aluminum oxide upon mild thermolysis, while they also react with metal complexes to form doped or mixed aluminum oxides (Kareiva et al. 1996).

The control of porosity (pore size, pore size distribution and pore density) is an important aspect of ceramics. Lower porosity improves strength, load-bearing capacity, and corrosion resistance, but can also lead to catastrophic failure from thermal shock, because the pores present act as crack stoppers in more porous ceramics. Cracks propagate intergranularly (between grains) and therefore the grain boundary toughness plays a large role in determining the fracture mode. Porosity between grains can promote crack propagation and lower the strength of a ceramic body. In both traditional and sol-gel processes, the porosity of the resulting ceramic is controlled through physical processing variables (Wilson and Stacey, 1981), such as the time or temperature of firing and the addition of pre-fired additives to seed crystal growth (Shelleman et al. 1986). Direct chemical control has not been observed. Furthermore, the pore size, pore size distribution and porosity are functions of the ceramic particles used to make the ceramic body, because the porosity is determined by the gaps between the individual particles (Figure 4) and is therefore inter-granular, that is between the crystal grains. For example, pores below 0.1 µm in diameter require that submicron powders be used (in traditional ceramic processing),, while smaller pores require sol-gel processing.

A particularly important area where the strength and porosity of ceramic materials is affected by the formation of inter-phase materials in fiber reinforced ceramic matrix and metal matrix composites. Fiber reinforced ceramic matrix composites (FRCMCs) are potential candidates for use in high temperature structural applications (Courtright, 1991). For example, aerospace applications include high thrust-to-weight ratio gas turbine engines and high-specific-impulse rocket motors. Ground based applications include high efficiency turbine and diesel engines. In each of these applications there is a need for high performance ceramic materials that can be readily fabricated into complex shapes. Compared to current materials (e.g., nickel based superalloys) and proposed metallic and intermetallic matrix composites, FRCMCs have higher strengths at lower densities, higher maximum use temperatures, and better oxidation resistance. Ceramic materials are well known for their stability at high temperatures, adequate strength and resistance to corrosion, and can meet most of the requirements for gas turbine applications. However, the brittle nature of ceramic materials and their tendency to undergo catastrophic failure has limited their usefulness. By reinforcing ceramic materials with fibers, catastrophic failures can be reduced or eliminated. A major drawback in existing fiber reinforced ceramic matrix composites (FRCMCs) is the absence of a fiber-matrix interface (or interphase) that is weak and stable over the entire range of expected use. Limitations of such prior art FRCMCs are the instability of known interfaces and the chemical reactivity of many weak interphases with the fiber and/or matrix. The chemical design of interfaces to optimize the adhesion or transfer of load between reinforcing phase and the matrix, to enhance crack deflection through debonding or to control interfacial reactivity/stability are an important development. For both the fiber and ceramic matrix, material requirements include: high melting points, high modulus, low density, freedom from destructive phase transformations, low volatility, oxidative stability, and creep resistance. For structural applications at high temperatures, environmental stability and creep resistance are the dominant factors in determining the usefulness of ceramic materials. In general, monolithic polycrystalline oxide ceramics lose strength above 1200 °C. Therefore, monolithic ceramics must be strengthened with high modulus fibers. The only materials that retain strength at these high temperatures, and under severe oxidative environments, are oxide fibers (e.g., sapphire) or silicon carbide (SiC) fiber. An additional concern is that the matrix and fiber materials must be chemically compatible (i.e., not react with each other). In fiber reinforced ceramic, the reinforcement is to enhance the fracture toughness. The fiber reinforcement prevents catastrophic brittle failure by providing mechanisms to dissipate energy during fracture. The operation of various toughening mechanisms, such as crack deflection, fiber pull out, and fiber bridging, depend to a large extent on the degree of chemical and/or mechanical bonding at the fiber-matrix interface. This chemical bonding is affected by the fiber surface chemistry and chemical reactivity between the fiber and matrix. The mechanical bonding is primarily controlled by the fiber surface morphology and the fiber/matrix thermal expansion match. In general, composites with strong interfacial bonding exhibit brittle behavior, characterized by high strength and low fracture toughness. If the interfacial interaction is weak then a composite will fail by catastrophic manner, and show high fracture toughness but low strength. It is therefore highly desirable to control the interfacial bond in order to optimize the overall mechanical behavior of the composite. The fiber-matrix interface must be sufficiently weak to allow debonding and sliding when a crack impinges upon it from the matrix; otherwise the crack passes through the fiber (or the fiber fails near the crack tip) and there is minimal or no toughening (Michalke and Hellmann, 1988). To control the strength of fiber coatings and the interaction between the coating and both the fiber and matrix, is extremely important to control the porosity of the coating materials.

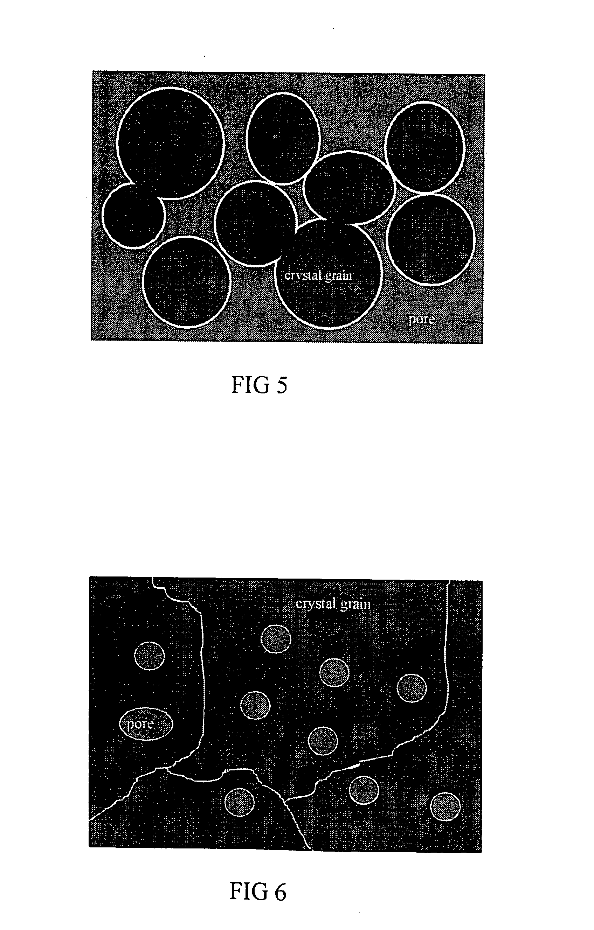

In contrast, control of pore size, pore size distribution and porosity in ceramics is important for their applications in ceramic membranes and catalyst supports. Membrane-based technologies play a unique and increasingly important role in pollution prevention, resource recovery and waste treatment activities (Baker, 1991). Due in large part to cost considerations, polymeric membranes have dominated these environmental separations applications. However, the use of polymeric membranes in separations involving aggressive materials such as many solvents, acids, bases, and oxidants may be limited by the tolerance of these membranes to extreme conditions (Hsieh, 1988). Ceramic membranes are noted for their excellent mechanical strength and tolerance to solvents, pH, oxidant, and temperature extremes. In addition, the amphoteric properties of ceramic membrane surfaces result in a uniquely versatile membranes for water and waste water treatment. Membrane charge, selectivity, and permeation rate vary as a function of pH, ionic strength and other characteristics of the feed water solution chemistry, Baltus (1997) and Kim and Stevens (1997). Membrane characteristics as well as the properties of the contaminants can be manipulated through adjustments in the solution chemistry of the feed stream in one or more pretreatment steps (Anderson et al. 1988). Ceramic membranes are typically produced by slip casting a colloidal suspension on a porous ceramic support: Okubo, et al. (1990), Elaloui et al. (1997), Lin et al. (1991), Lao et al. (1994), Zaspalis et al. (1992). A schematic view of a typical membrane design is shown in Figure 5. The individual membranes are mounted into a membrane module (see Figure 6). Control of the colloidal suspension in the sol-gel process and limitations on the size of colloids that can be produced have constrained the range of membrane types that can be produced. In addition, a key obstacle to overcome in advancing the use of ceramic membranes for pollution prevention applications is cost. The sol-gel processes currently used to produce commercially available ceramic membranes is energy intensive and difficult to control. Considerable time and expense is invested in verifying membrane integrity and re-casting membranes to repair imperfections. Alternative approaches for manufacture of ceramic membranes include the anodic oxidization of aluminum metal membranes (Furneaux et al. 1989), pore size being controlled by the applied voltage used in the anodic oxidation. However, strong dielectric solutions of various acids must be employed, and ion beam or chemical etching is performed to produce a working filter. An ideal ceramic membrane must be highly selective, highly permeable, and highly durable. The membrane selectivity is primarily dependent upon the pore-size distribution: a narrow distribution contributes to a highly selective membrane. Membrane permeability is a function of global porosity, membrane thickness, connectivity, and pore-size distribution. Membrane durability is obtained by high homogeneity and high density; the latter entails a clear compromise with permeability. Mechanical integrity is enhanced in such application by slip-casting a relatively thin selective membrane onto a larger, durable membrane of poor selectivity but high permeability.

### SUMMARY OF THE INVENTION

The present invention provides a method of controlling the porosity and pore size distribution of ceramic bodies comprising: reacting boehmite with a carboxylic acid to produce carboxylate-alumoxane nanoparticles; drying the carboxylate-alumoxane nano-particles; re-dissolving the carboxylate-alumoxane nano-particles in a solvent; drying the nano-particles; andfiring the dried nano-particles at a temperature greater than 300 °C.

The inventive method preferably uses carboxylate-alumoxanes that can be described by the general formula:

[Al(O)ₓ(OH)_{y}(O₂CR)_{z}]ₙ

and/or

[Al(O)ₓ(OH)_{y}(O₂CR)_{z}(O₂CR')_{z'}]ₙ

and/or

[Al(O)ₓ(OH)_{y}(O₂CR)_{z}(O₂CR')_{z'}(O₂CR")_{z"}]ₙ

etc.
where RCO₂- (and R'CO₂- and R"CO₂-) are mono-carboxylates and R (and R' and R") are the same or different and are from the group of a hydrogen and/or an organic group. The organic group is preferably an alkyl, alkenyl, aromatic, haloalkyl, haloalkenyl, haloaromatic groups or alkyl, alkenyl, aromatic ether groups or an organic group containing a hetero-atom including, oxygen, nitrogen, sulfur, phosphorous. These components may be prepared by the methods described in Landry et al. (1995), Apblett et al. (1992), Kareiva et al. (1996), and the preferred method of Callender et al. (1997). The composition of the carboxylate-alumoxane varies depending on the starting materials employed and the details of the synthetic method employed by Callender et al. (1997). Thermolysis of the carboxylate-alumoxanes results in alumina being formed. In accordance with the present invention, the size and distribution of pores within the alumina-oxide ceramic is dependent on the identity of the carboxylate substituents. In particular, the formation of intra- versus inter-granular porosity is dependent on the identity of the carboxylate substituents. Similarly, size and distribution of the pores is controlled by the choice of the organic substituents.

The invention also provides methods for the manufacture of ceramic coatings on ceramic and carbon fibers for composite applications and ceramic membranes with nanometer sized pores. Dipping a ceramic or carbon fiber into a solution of the carboxylate-alumoxane in accordance with the invention, drying and firing provides a uniform coating of the aluminum-oxide based ceramic on the surface of the fiber. The pore size, pore size distribution and porosity, and hence the strength, permeability and surface adhesion of the ceramic coating is controlled by the choice of the substituent on the carboxylate-alumoxane. Thermolysis of self-supporting spun layers of the carboxylate-alumoxanes results in disks of alumina with controlled pore size, pore size distribution and porosity. Also, a porous substrate may be dipped or coated with a solution of the carboxylate-alumoxane, followed by thermolysis to produce a composite membrane.

Accordingly, in a preferred embodiment, the ceramic body comprises the thermolysis product of a carboxylate-alumoxane represented by the formula [Al(O)ₓ(OH)_{y}(O₂CR)_{z}]ₙ, wherein x is from 0 to 1.5, y is from 0 to 3, z is from 0 to 3, n is greater than 6, and R is hydrogen or an organic group.

### BRIEF DESCRIPTION OF THE DRAWINGS

For a more detailed description of the preferred embodiments of the present invention, reference will not be made to the accompanying drawings, wherein:
Figure 1 is a schematic representation of the core of an alumoxane sol-gel material;
Figure 2 is a schematic representation of the periphery of a typical siloxide-alumoxane;
Figure 3 is a schematic representation of the periphery of a carboxylate-alumoxane;
Figure 4 is a schematic representation of a typical spacer ligand;
Figure 5 is schematic representation of intergranular porosity;
Figure 6 is a another schematic representation of intergranular porosity;
Figure 7 is a pictorial representation of the reaction of boehmite with carboxylic acids;
Figure 8 illustrates thermal processing of alumoxanes by a controlled heating series;
Figure 9 illustrates a model for inter-granular versus intra-granular porosity;
Figure 10 illustrates particle size determination by Photon Correlation Spectroscopy (PCS);
Figure 11 is a graphical representation of particle size determination of carboxylate-alumoxanes in water by PCS;
Figure 12 is a graphical representation of particle size determination of various aliquots removed from the reaction of MEA-H with boehmite by PCS;
Figure 13 shows Transmission Electron Microscopy (TEM) images of α-Al₂O₃ from carboxylate-alumoxanes;
Figure 14 is a TEM image of Al₂O₃ ceramic material from fired acetate-alumoxane;
Figure 15 shows TEM negative images of fired acetate-alumoxane illustrating intra-granular pores;
Figure 16 shows images of fired acetate-alumoxane illustrating intragranular porosity;
Figure 17 is a Selected Area Diffraction (SAD) image of fired acetate-alumoxane ceramic material;
Figure 18 shows surface images of mixed carboxylate-alumoxanes;
Figure 19 is a schematic representation of the method of formation of a membrane;
Figure 20 is a schematic representation of the structure of a filter-supported membrane;
Figure 21 is a SEM image of a coated frit;
Figure 22 shows micrographs of coated carbon fibers;
Figure 23 shows a micrograph of a hibonite coated silicon carbide fiber;
Figure 24 shows micrographs of coated and uncoated sapphire fibers;
Figure 25 is a schematic representation of a mixed-ligand alumoxane;
Figure 26 is a bar chart comparing the pore size distributions of two carboxylate alumoxanes and a physical mixture of two carboxylate alumoxanes; and
Figure 27 is a bar chart comparing the pore size distributions of two carboxylate alumoxanes and a chemical mixture of two carboxylate alumoxanes.

### DETAILED DESCRIPTION OF THE INVENTION

This invention discloses the use of carboxylate-alumoxanes ([Al(O)ₓ(OH)_{y}(O₂CR)_{z}]ₙ) and/or aluminum-oxide nano-particles to prepare alumina and aluminum oxide-based ceramic bodies, coatings and membranes with chemically controlled pore sizes, pore size distributions and porosities. Such ceramics with chemically controlled porosities may be used as membrane materials with controlled pore size distributions or as coatings on fibers.

The carboxylato-alumoxanes are precursors to alumina and aluminum oxides (Table 1) and are prepared by the reaction of boehmite or pseudoboehmite with carboxylic acids in a suitable solvent (Tables 2, 3, 4, and 5). The boehmite (or pseudoboehmite) source can be a commercial boehmite product such as Catapal (A, B, C, D, or FI, Vista Chemical Company) or boehmite prepared by the precipitation of aluminum nitrate with ammonium hydroxide and then hydrothermally treated at 200 °C for 24 hours or boehmite prepared by the hydrolysis of aluminum trialkoxides followed by hydrothermal treatment at 200 °C. The carboxylic acid can be any monocarboxylic acid. The carboxylic acid can be aromatic, aliphatic, and can contain hetero-atom functional groups such as hydroxyls, amines, mercaptans, phosphines, etc. Unlike sol-gel synthesis the carboxylate alumoxanes are stable both in solution and the solid state. In addition, whereas the choice of solvents in sol-gel synthesis is limited, the solubility of the carboxylate alumoxanes is dependent only on the identity of the carboxylic acid residue, which is almost unrestricted according to the present invention. The solubility of the alumoxanes is therefore readily controlled so as to make them compatible with any co-reactants. While these advantages are significant, the alumoxanes have yet further benefits with respect to large scale production of ternary and quaternary ceramics. The most dramatic of these is the simplicity of the alumoxane methodology. The alumoxane route is simple, and can be halted and/or modified at any stage without significant effects on the products. A careful control of pH, the use of additives to inhibit precipitation, and slow concentration steps are not required, thus making the alumoxane route easier and quicker than prior art techniques. Another benefit with respect to large scale processing is the relatively low cost of the alumoxane precursors.

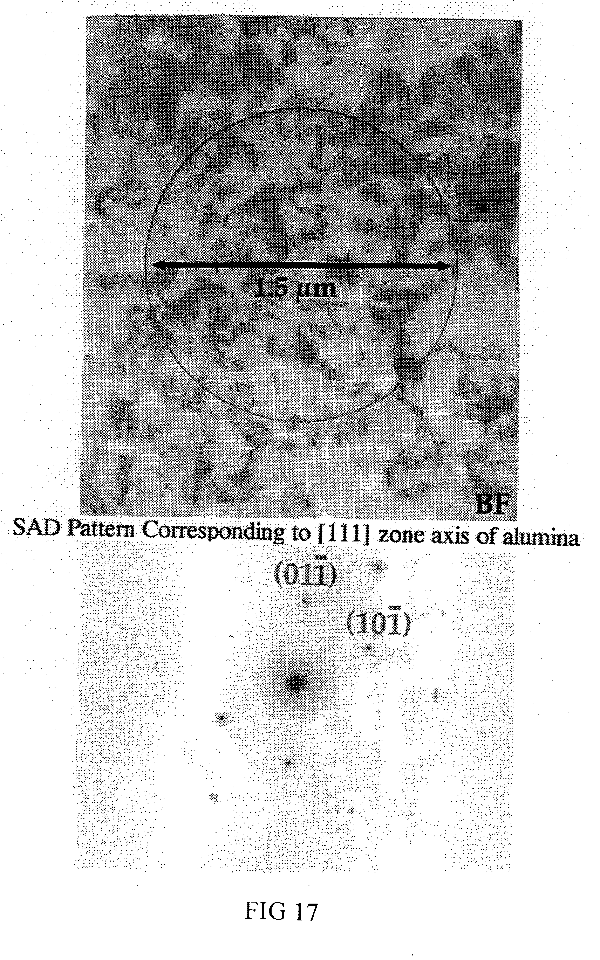

Thermogravimetric/differential thermal analysis (TG/DTA) of the carboxylate-alumoxanes generally indicates two major decomposition regions. The relative mass loss and temperatures at which these regions occur is dependent on the identity of the carboxylic acid. The volatiles are predominantly the carboxylic acid and water, with traces of the ketone, i.e., acetone is liberated from the acetate-alumoxane (A-alumoxane or A-A). As may be expected, the ceramic yield is conditional on the identity of the carboxylic acid: greatest for A-A (*ca.* 75 %), lowest for methoxy(ethoxyethoxy)acetate-alumoxane (MEEA-A) (*ca.* 20 %). All of the carboxylate-alumoxanes decompose above 180 °C to give amorphous alumina. Firing above 900 °C (≥ 3 h.) results in the formation of better ordered mixed phase γ-Al₂O₃ (JCPDS # 29-63) and α-M₂O₃ (Corundum, JCPDS # 42-1468), as would be expected based on the known transformation sequence of alumina. All of the carboxylate alumoxanes are converted to α-alumina above 1000 °C with firing times ≥ 4 hours. It is interesting to note that the A-alumoxane is highly reactive and forms crystalline α-Al₂O₃ at temperatures below 850 °C (Table 1). The lower temperature of this phase formation and failure to observe γ-Al₂O₃ from A-alumoxane is consistent with the very small initial pore size (large surface area) and rapid sintering rates. The conversion of acetate-alumoxane (A-A) to α-alumina at lower than the expected temperatures (Figure 17), and the apparent lack of the γ-alumina phase being formed, is useful since the conversion of γ-alumina to α-alumina is associated with a change in density and a decrease in volume. This decrease in volume is detrimental to the formation of stable ceramic composites.

All the un-doped carboxylate-alumoxanes in the examples reported below produced uniform, translucent, fired bodies with differences in microscopic pore size, pore size distribution and porosity, but with similarities in macroscopic density. Both MEEA- and MEA-(methoxy(ethoxyethoxy)acetate)- -alumoxane produce either high porosity translucent solid "foam" or slightly translucent bodies consistent with a smaller porosity/higher microscopic density.

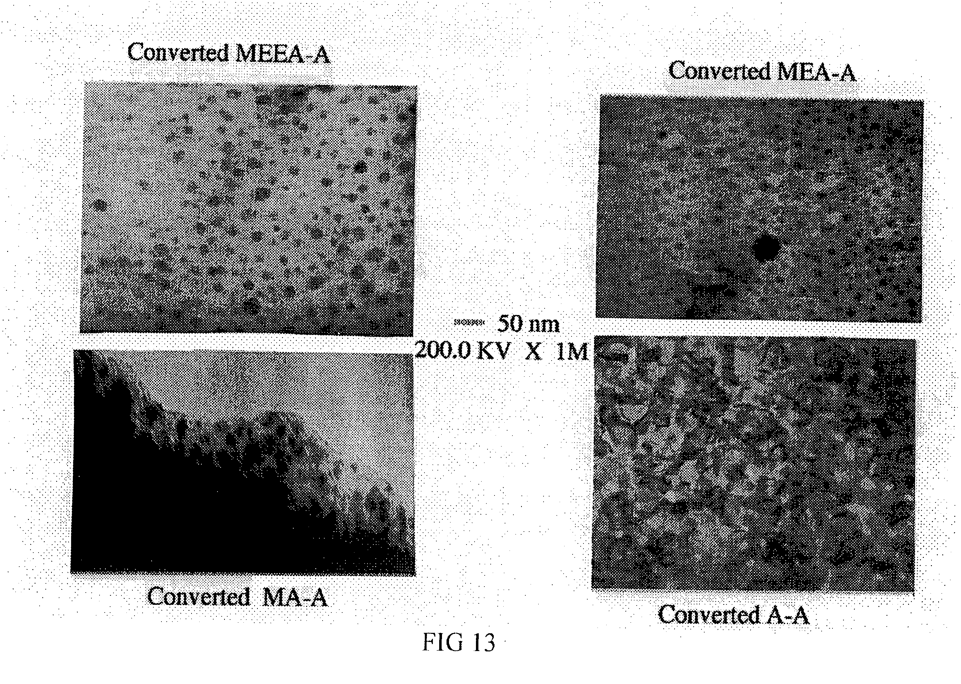

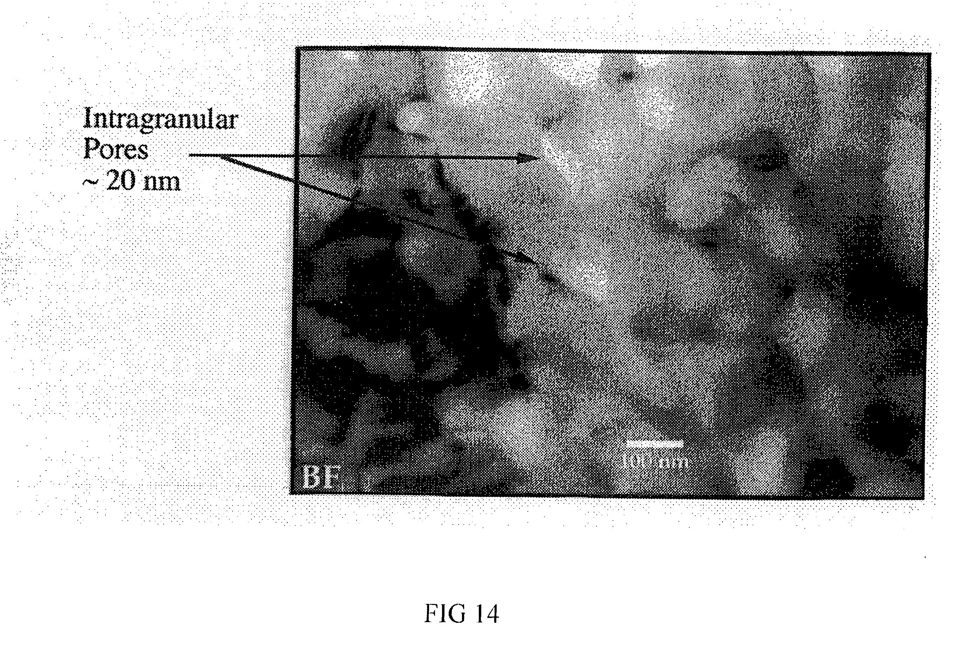

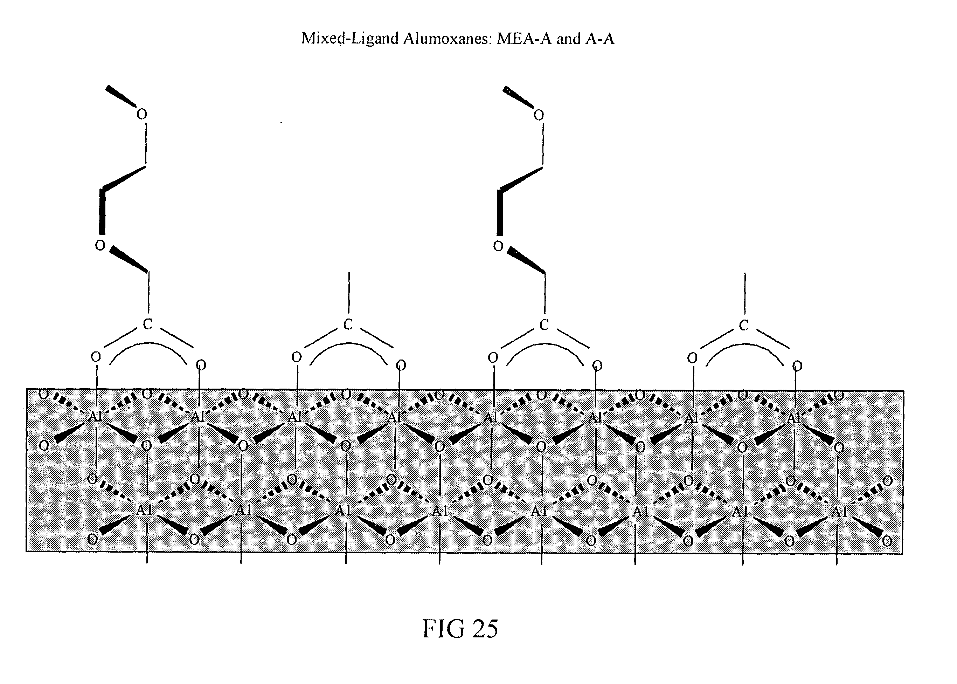

The α-Al₂O₃ formed from MEEA-, MEA-, and MA- (methoxyacetate) alumoxanes exists as a nanocrystalline matrix with a very high volume of large interconnecting pores, as determined by TEM studies (Figure 13). In contrast, analysis of the α-Al₂O₃ formed from A-alumoxane revealed very fine uniform intra-granular porosity (Figure 14), in which the crystallite size is relatively large (ca. 2 µm). The difference in pore size and structure is more consistent with the chemical identity of the substituents than the physical processing conditions, i.e., a higher organic volume outgassed produces larger pores. Using the alumoxane series, it is possible to engineer pore size continuously between these extremes by using mixed ligand solutions (Figure 25).

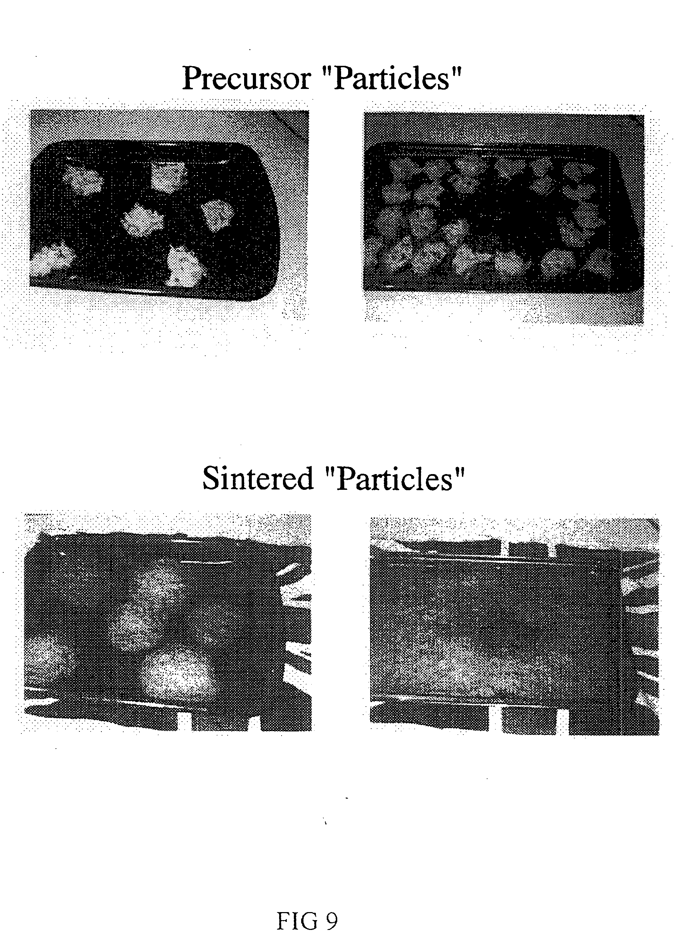

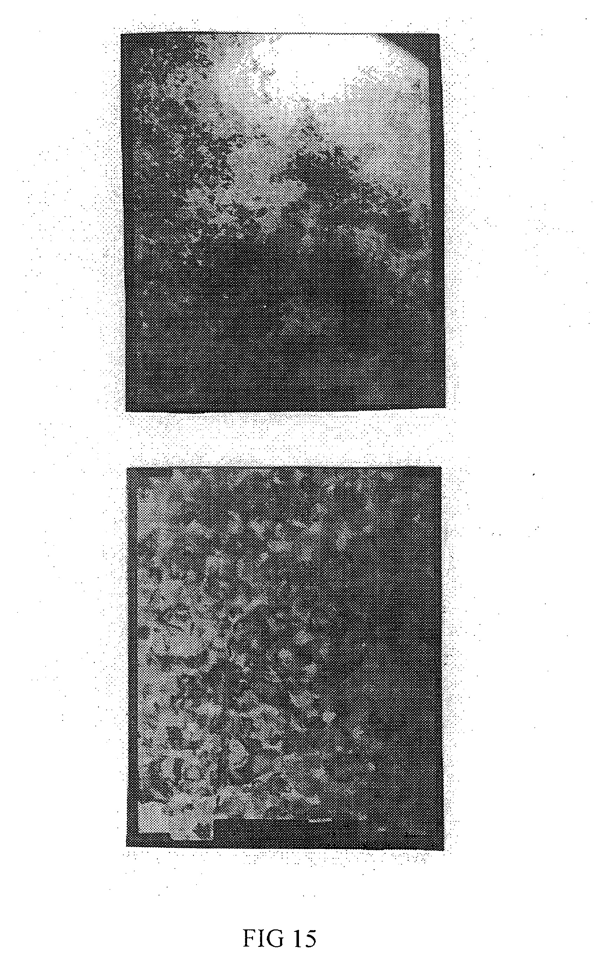

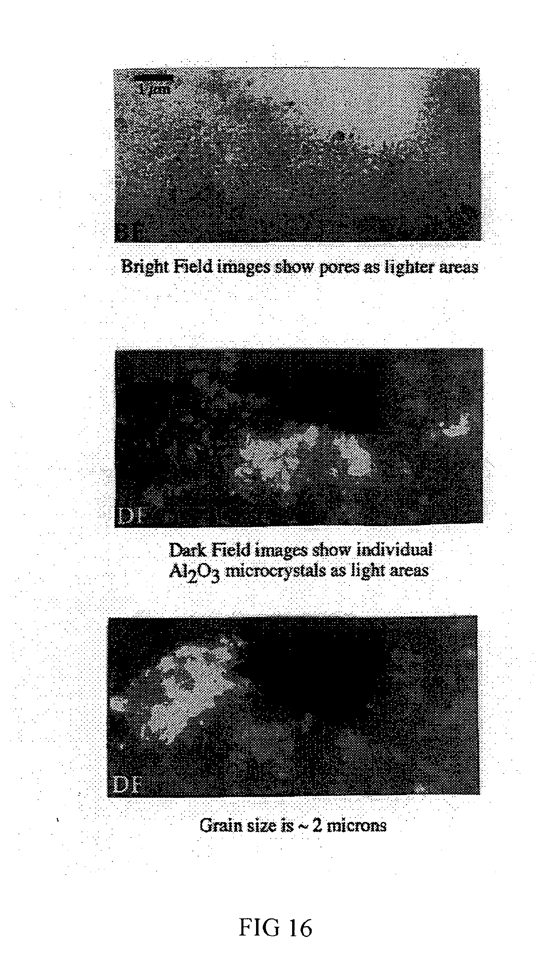

Further study of the acetate-alumoxane (A-alumoxane) indicates that instead of the usual inter-granular porosity (Figures 15 and 16) the pores are intra-granular, that is, they are within the individual crystal grains (Figure 6). This novelty of chemical control over the formation of intra-granular (rather than inter-granular) porosity has the aforementioned benefit of increased fracture toughness. Intra-granular pores instead of inter-granular therefore allow increased fracture toughness and less opportunity for pore/boundary/crack interactions to occur. The formation of intra-granular pores for the A-alumoxane is thought to be due to the nano-particulate nature of the acetate-alumoxane and the small length of the organic substituent (Figure 9) Table 2. Other carboxylate-alumoxanes can produce intra-granular porosity if the nano-particle size is less than 50 nm.

Control of pore size, pore size distribution and porosity, and hence density, through chemical means is an important departure from traditional ceramic processing in which physical methods only are applied. The porosity of the resulting alumina is dependent on the length of the carboxylate side chain. That is, the pore sizes for carboxylate-alumoxanes with CH₃ substituents is different from those with C₅H₁₁ substituents. Another approach to controlling pore size, pore size distribution and porosity described herein is the use of spacer ligands. The alumoxane can be cross-linked after fabrication of the membrane with di-acids (Figure 4). Upon pyrolysis, it then inhibits the collapse of the ceramic.

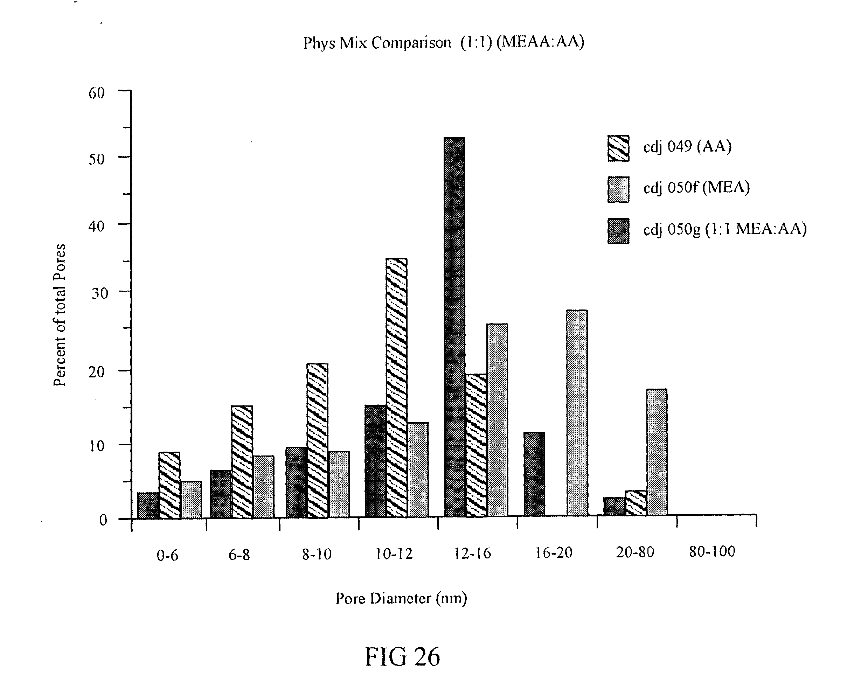

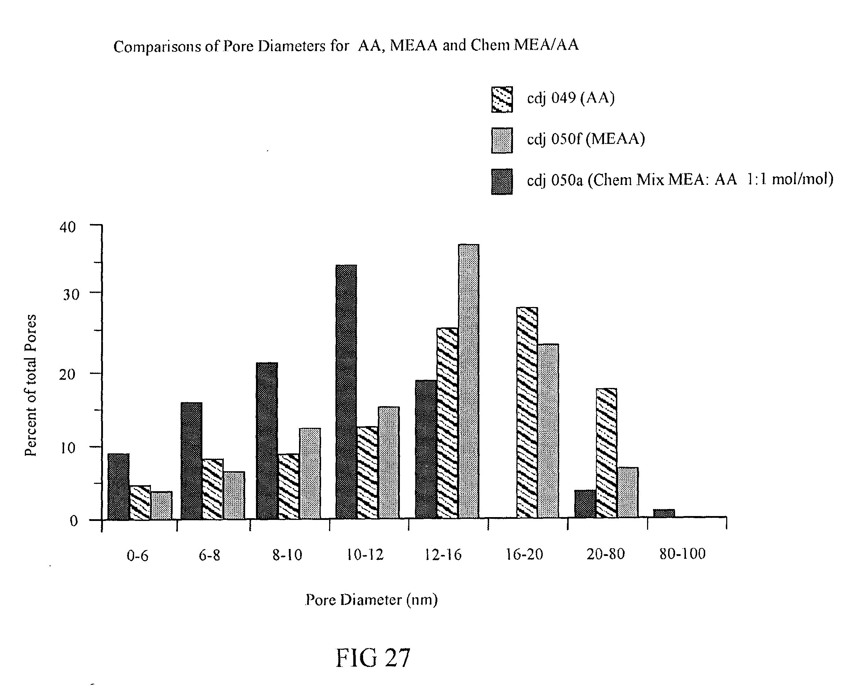

Instead of using a single carboxylate-alumoxane, a physical mixture of more than one carboxylate-alumoxane may be produced and fired to alumina (Tables 4, 5, 6 and 7). The porosity (average pore size and pore size distribution) is dependent on the relative amounts of each carboxylate-alumoxane (Table 8). In general, the porosity is a mixture of the values of each individual carboxylate-alumoxane (Figures 26 and 27). Mixed carboxylate-alumoxanes may be synthesized in which more than one type of carboxylate group is bonded to each of the alumoxane nano-particles. The resulting porosity is different than the individual materials, and is dependent on the relative concentration of each carboxylate used (Table 8). The relative intra- to inter-granular porosity can be controlled by the choice of carboxylate group and/or mixtures or carboxylate groups.

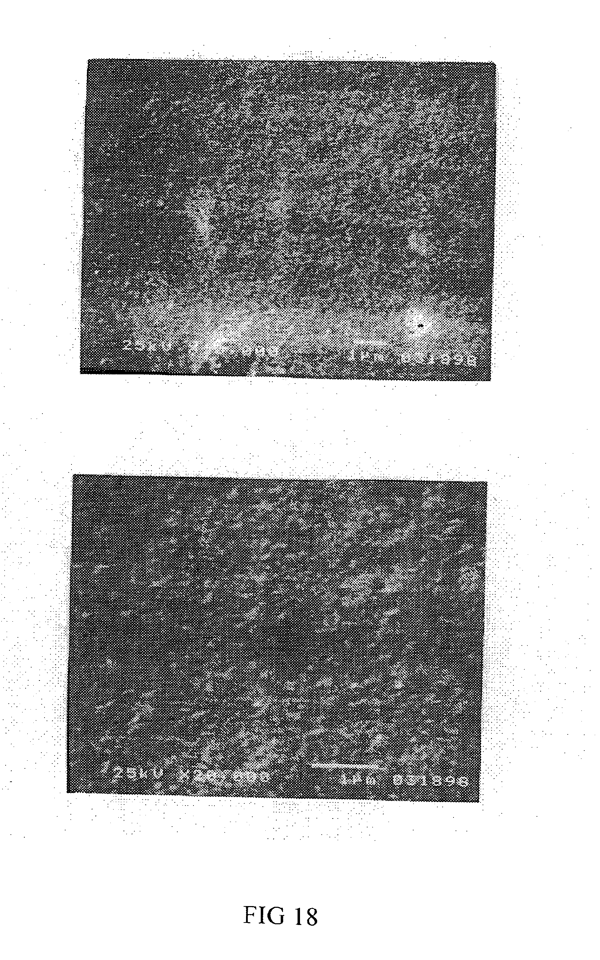

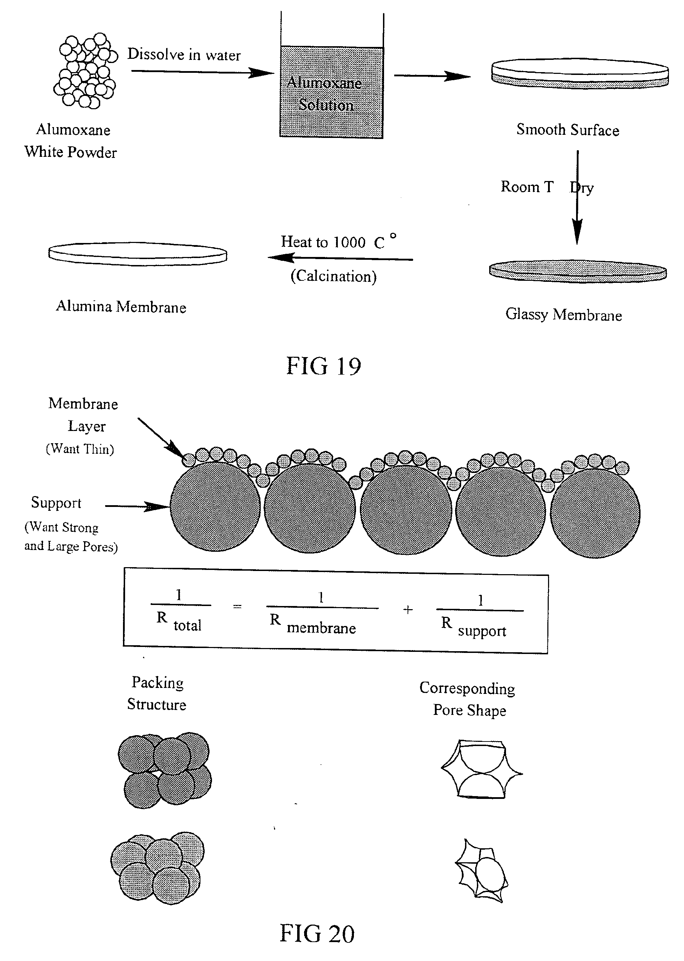

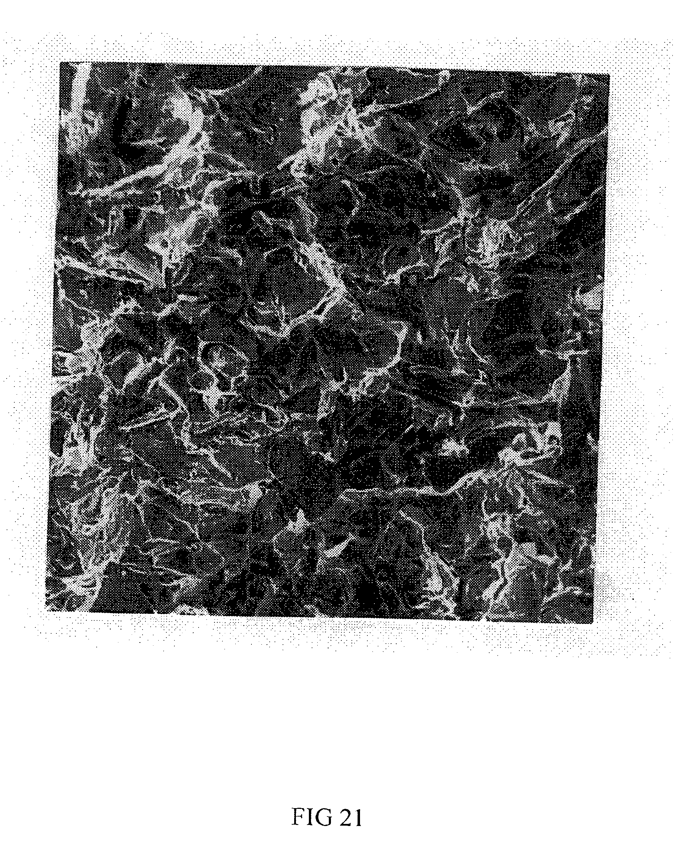

Solutions of the carboxylate-alumoxanes may be evaporated to leave a thin membrane which is glass-like (Figure 19). The resulting glassy membrane can then be fired to produce a ceramic membrane in which the porosity is controlled by the choice of the carboxylate group and/or ratio of physically and/or chemical mixtures of two or more carboxylates (Figure 18). As an alternative to a self-supporting ceramic membrane, a porous substrate such as a glass or ceramic filter frit may be spun coated, painted, or dip-coated with the carboxylate-alumoxane solution, Figure 21 (Tables 9 and 10). After drying and firing the composite consists of a membrane supported on a coarse filter (Figure 20). The support for the carboxylate-alumoxane derived ceramic membrane does not have to be flat but may be a ceramic tube or column. If doped carboxylate-alumoxanes are employed, then the resulting membrane will have the composition of the doped carboxylate-alumoxane. In order to ensure that uniform membranes are produced, physical mixtures of different carboxylate-alumoxanes can be used. The lowering of phase formation/crystal growth temperatures observed for the carboxylate-alumoxane in comparison to sol-gel methods, allows for smaller pores to be generated without being sintered out during thermal treatment.

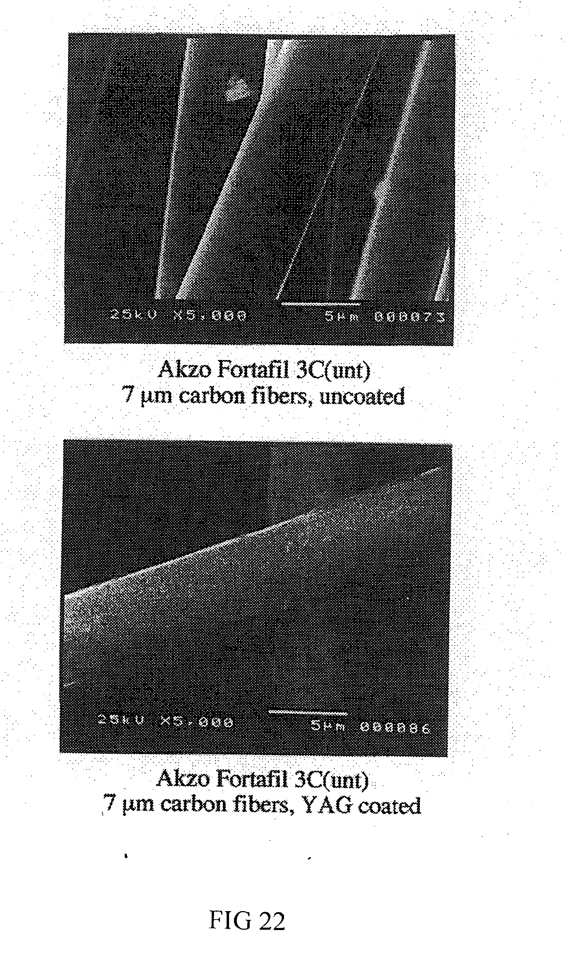

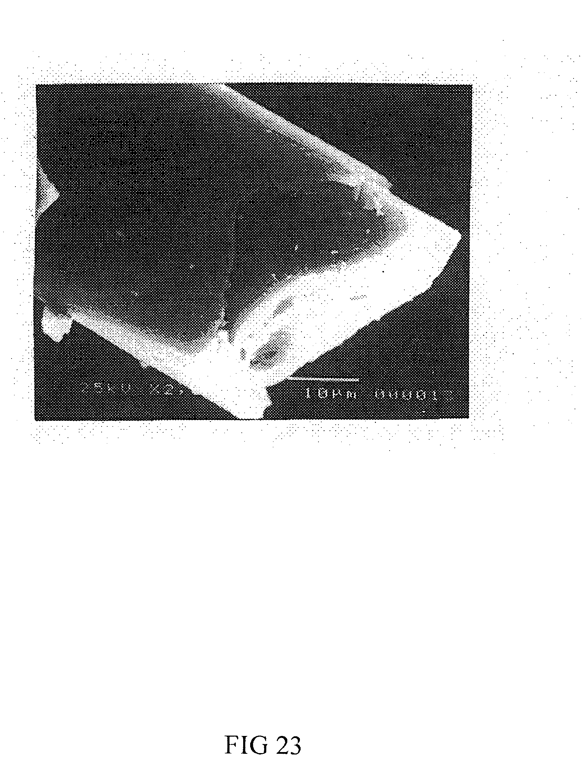

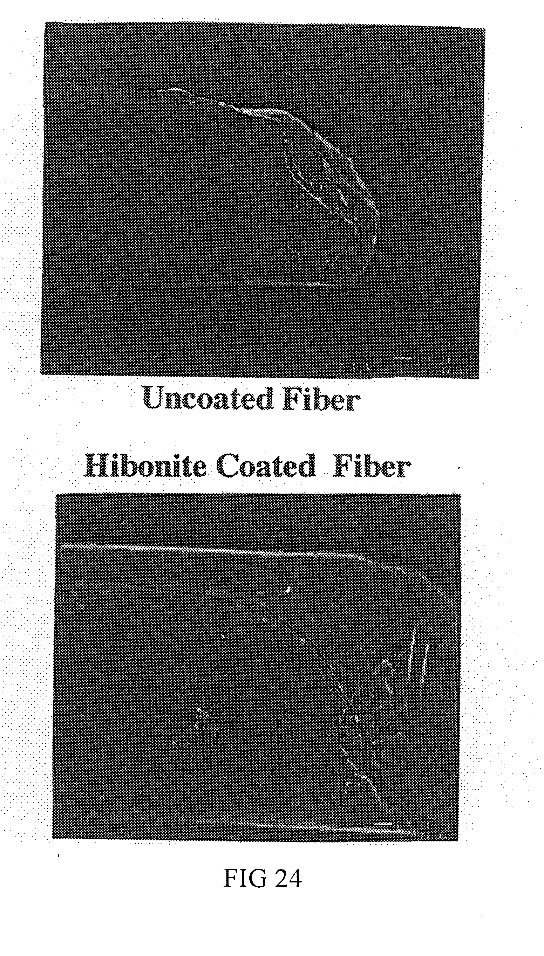

Carbon or ceramic fibers can also be dipped or coated with a solution of the carboxylate-alumoxanes (Figures 22, 23, and 24). After drying either in air, in an oven or with a heat gun, the carboxylate-alumoxane can be thermolyzed to give the appropriate ceramic coating with a chemically controlled porosity. Suitable ceramic fibers include (but are not limited to) silicon carbide (Figure 23) and sapphire (Figure 24). The conditions of thermolysis of the alumoxane coating are dependent on the type of the fiber and the identity of the carboxylate-alumoxane. The ceramic coatings produced using the carboxylate-alumoxanes show superior coverage, better uniformity, and lower defects than found for sol-gel type coatings, due to the nano-particle nature of the carboxylate-alumoxane. Furthermore, the lowering of phase formation/crystal growth temperatures observed for the carboxylate-alumoxane allow for less damage to the fiber substrate during formation of the ceramic coating.

### EXAMPLES

Surface area and pore size analysis were conducted on all samples utilizing a Coulter SA 3100 Plus. Sample tubes used are all Coulter Rapi-tubes. Samples were outgassed at 350 °C for 3 hours under nitrogen gas on the SA 3100. All sample masses were in the 0.100 g to 0.190 g range. For actual analysis, nitrogen gas was also used as the absorbate and helium gas was used to measure the free-space in the sample tube. BET surface area was determined using 5 data points. The t-plot method was determined utilizing the Harkins-Jura equation at normal resolution. BJH parameters were determined using medium (45 data points) resolution and the equation used was Harkins-Jura. Pore size distributions (and weighted averages) are reported as a function of the BJH adsorption. AFM images of samples were obtained using a Nanoscope IIIa Scanning Probe Microscope, (Digital Instruments, Santa Barbara, CA) in tapping mode AFM. FESP tips were used with a pyramidal shape and end radius of 5 - 10 nm (also from Digital Instruments). Images were taken at scan sizes of 10 µm, 1 µm, and 200 nm, and the scan angle was changed from 0 to 45° to check the integrity of the images. Images were later processed to obtain roughness, grain size, and section analysis with the accompanying Nanoscope software. Permeability was derived from Flux experiments using dead end filtration cells from Spectrum and Sartorious. The cells were 400 mL and 200 mL (respectively) and were connected to a tank of zero-air for positive pressure. A pressure regulator was used to set constant pressure for each flux experiment at 10, 20, or 30 psi, and filtrate was collected in beakers and measured volumetrically. Ultrapure deionized water was used, obtained from a Milli-Q water filter. Membrane samples were epoxied to precut aluminum foil disks with precut holes in the center, of known area, matching each membrane piece. The membrane pieces had an area between 0.5 and 2 cm² and a thickness of 100 to 250 µm. Prewetted glass fiber supports were placed underneath the membranes to prevent cracking. Contact angle was measured with a goniometer. Samples from flux experiments were used, since they were already mounted on a pliable foil. Samples were placed upside-down on top of a glass container full of deionized water, with the sample submerged. An air bubble was placed on the sample surface and ten readings of the contact angle were read for each side of a bubble. Air bubbles occurring naturally on the membrane surface were measured using the same procedure. Surface charge was determined by measuring the electrophoretic mobility with a Zeta Meter. Membranes were crushed with a mortar and pestle and combined with sodium chloride as an electrolyte to form a 500 mg.L⁻¹ alumoxane and 500 mg.L⁻¹ NaCl solution. The solutions were set at various pHs using HCl or NaOH, and electrophoretic mobility and zeta potential were measured at several different voltages.

The following examples are presented to illustrate the ease and versatility of the approach and are not to be construed as the only examples of the proposed approach or as limiting the scope of the present invention.

### Example 1: Synthesis of methoxy(ethoxyethoxy)acetate-alumoxane (MEEA-A).

Pseudoboehmite (20.0 g) and methoxy(ethoxyethoxy)acetic acid (102 mL) were refluxed in water (400 mL) resulting in a clear solution after 72 h. The solution was centrifuged at 6000 rpm for 1 hour and decanted. Removal of the volatiles in vacuo (10⁻² Torr) at 90 °C yielded a gel which was then dissolved in ethanol (100 mL) while stirring (10 min.) then triturated with diethyl ether (200 mL). The white solid powder thus obtained was redissolved in water (100 mL) and dried at 50 °C for 24 h resulting in a clear glassy material. The MEEA-alumoxane is soluble in water, methanol, chloroform, and methylene chloride. The alumoxane was heated from 25 °C to 225 °C at the rate of 1°C/min., soaked for 30 mins. at 225 °C, followed by a temperature ramp up to 300 °C at the rate of 2 °C/min., and soaked for 80 mins., with a final ramp to the maximum temperature of 1100°C (over 360 minutes) which was then maintained for 400 minutes (Figure 8).

### Example 2: Synthesis of methoxy(ethoxyethoxy)acetate-alumoxane.

Methoxy(ethoxyethoxy)acetic acid (60 mL) was dissolved in 300 mL of water and Vista Captal B boehmite (12 g) was slowly added and allowed to reflux for 96 hours. The clear/yellow solution was filtered and the filtrate was evaporated under reduced pressure to a yellow gel. The gel was dissolved in ethanol and the white/yellow powder product was obtained upon addition of diethyl ether. Yield: 13.6 g. The TGA of the methoxy(ethoxy)acetate-alumoxane showed 22.3% ceramic yield (weight loss of 77.7% ). The alumoxane was heated from 25 °C to 200 °C at the rate of 1.5 °C.min⁻¹, soaked for 2 h. at 200 °C, followed by a temperature ramp up to 1000 °C at the rate of 5 °C.min⁻¹, soaked for 2 h.

### Example 3: Synthesis of Methoxy(ethoxy)acetate-alumoxane (MEA-A).

Pseudoboehmite (10.0 g) and methoxy(ethoxy)acetic acid (38.0 mL) were refluxed in water (100 mL) for 24 h, resulting in a clear solution. The solution was centrifuged at 6000 rpm for 1 h and decanted. The water was removed in vacuo (10⁻² Torr) at 50 °C, resulting in a gel. The gel was washed with Et₂O (3 x 75 mL) then dissolved in EtOH (50 mL) while stirring (10 minutes). The MEA-alumoxane was precipitated via the addition of Et₂O (100 mL) as a white powder. After drying overnight at 50 °C the solid yield was approximately 25 g. The alumoxane was heated from 25 °C to 225 °C at the rate of 1°C/min., soaked for 30 mins. at 225 °C, followed by a temperature ramp up to 300 °C at the rate of 2 °C/min., and soaked for 80 mins., with a final ramp to the maximum temperature of 1100°C (over 360 minutes) which was then maintained for 400 minutes.

### Example 4: Synthesis of Methoxy(ethoxy)acetate-alumoxane.

Methoxy(ethoxy)acetic acid (152 mL) was dissolved in 400 mL of water and Vista Captal B boehmite (40 g) was slowly added and allowed to reflux for 24 hours. The clear/yellow solution was filtered and the filtrate was evaporated under reduced pressure to a yellow gel. The gel was dissolved in ethanol and the white/yellow powder product was obtained upon addition of diethyl ether. Yield: 82.1 g. The TGA of the methoxy(ethoxy)acetate-alumoxane showed 27.0% ceramic yield (weight loss of 73.0 % ). The alumoxane was heated from 25 °C to 200 °C at the rate of 1.5 °C.min⁻¹, soaked for 2 h. at 200 °C, followed by a temperature ramp up to 1000 °C at the rate of 5 °C.min⁻¹, soaked for 2 h.

### Example 5: Synthesis of Methoxyacetate-alumoxane (MA-A).

Pseudoboehmite (10.0 g) and methoxyacetic acid (25.6 mL) were refluxed in water (150 mL) for 24 h. which resulted in a white cloudy solution with a trace of insoluble particles. The water was removed in vacuo (10⁻² Torr) at 50°C resulting in a white powder which was washed with diethyl ether (4 x 150 mL) then dissolved in ethanol (100 mL) while stirring (50 minutes). The alumoxane was precipitated via the addition of ether (300 mL). After drying overnight at 50°C the solid yield was approximately 20 g. The powder was dissolved in water (100 mL), isolated by filtration, concentrated under vacuum and dried at 50°C resulting in a white solid material. The alumoxane was heated from 25 °C to 225 °C at the rate of 1°C/min., soaked for 30 mins. at 225 °C, followed by a temperature ramp up to 300 °C at the rate of 2 °C/min., and soaked for 80 mins., with a final ramp to the maximum temperature of 1100°C (over 360 minutes) which was then maintained for 400 minutes.

### Example 6: Synthesis of Acetate-alumoxane.

Pseudoboehmite (20.0 g) was slowly added to a vigorously stirring mixture of acetic acid (51.0 mL) in water (200 mL). The resulting slurry was decanted after 10 minutes and then centrifuged at 6000 rpm for 1 hour to yield a clear viscous solution. Removal of the volatiles in vacuo (10⁻² Torr) at 90°C results in clear, white granules. The granules were dissolved in water and dried for 24 hours at 80 °C to yield a clear glassy material. The alumoxane was heated from 25 °C to 225 °C at the rate of 1°C/min., soaked for 30 mins. at 225 °C, followed by a temperature ramp up to 300 °C at the rate of 2 °C/min., and soaked for 80 mins., with a final ramp to the maximum temperature of 1100°C (over 360 minutes) which was then maintained for 400 minutes.

### Example 7: Synthesis of Acetate-alumoxane.

Acetic acid (80 mL) was dissolved in water (800 mL) to which Vista Captal B boehmite (100 g) was slowly added, and the reaction was stirred for at room temperature for 15 minutes. The clear solution was then decanted into centrifuge bottles and centrifuged at 4100 rpm for 1 hour. The solution was decanted away from the white powder and evaporated under reduced pressure at 80 °C, resulting in a white powder. Yield 81.3 g. The TGA of the acetate-alumoxane showed 71.9% ceramic yield (weight loss of 28.1 % ). The alumoxane was heated from 25 °C to 200 °C at the rate of 1.5 °C.mm⁻¹, soaked for 2 h. at 200 °C, followed by a temperature ramp up to 1000 °C at the rate of 5 °C.mm⁻¹, soaked for 2 h.

### Example 8: Synthesis of Acetate-alumoxane.

Prepared in an analogous manner to that in Example 7 with the amounts and conditions shown in Table 2.

### Example 9: Synthesis of Acetate-alumoxane.

Prepared in an analogous manner to that in Example 7 with the amounts and conditions shown in Table 2.

### Example 10: Synthesis of Malonate-alumoxane.

Malonic acid (5 g) was dissolved in water (50 mL) to which Vista Captal B boehmite (5 g) was slowly added and the reaction was stirred for 30 minutes until a thick gel formed. More water was added to the solution and the reaction was stirred for another 10 min. The resulting solution was filtered and the filtrate was evaporated under reduced pressure resulting in a white powder. Yield 6.75 g. The TGA of the malonate-alumoxane showed 37.1 % ceramic yield (weight loss of 62.9%). The alumoxane was heated from 25 °C to 200 °C at the rate of 1.5 °C.min⁻¹, soaked for 2 h. at 200 °C, followed by a temperature ramp up to 1000 °C at the rate of 5 °C.min⁻¹, soaked for 2 h. **Example 11: Synthesis of Malonate-alumoxane.**

Prepared in an analogous manner to that in Example 10 with the amounts and conditions shown in Table 3.

### Example 12: Synthesis of Malonate-alumoxane.

Prepared in an analogous manner to that in Example 10 with the amounts and conditions shown in Table 3.

### Example 13: Synthesis of Malonate-alumoxane.

Prepared in an analogous manner to that in Example 10 with the amounts and conditions shown in Table 3.

### Example 14: Synthesis of mixed ligand methoxy(ethoxy)acetate-acetate-alumoxane.

Acetic acid (19.0 mL) and methoxy(ethoxy) acetic acid (152.0 mL) was dissolved in 500 mL of water and Vista Captal B boehmite (20 g) was slowly added and refluxed for 72 hours. The white solution was filtered and the filtrate was dissolved under reduced pressure to yield a brown gel. The gel was dissolved in ethanol (100 mL) and the white powder product was obtained by the addition of diethyl ether. Yield: 8.9 g. The TGA of the product showed 32.5 % ceramic yield (weight loss of 67.5%). The alumoxane was heated from 25 °C to 200 °C at the rate of 1.5 °C.min⁻¹, soaked for 2 h. at 200 °C, followed by a temperature ramp up to 1000 °C at the rate of 5 °C.min⁻¹, soaked for 2 h.

### Example 15: Synthesis of mixed ligand methoxy(ethoxy)acetate-acetate-alumoxane.

Prepared in an analogous manner to that in Example 14 with the amounts and conditions shown in Table 4.

### Example 16: Synthesis of mixed ligand methoxy(ethoxy)acetate-acetate-alumoxane.

Prepared in an analogous manner to that in Example 14 with the amounts and conditions shown in Table 4.

### Example 17: Synthesis of mixed ligand methoxy(ethoxy)acetate-acetate-alumoxane.

Prepared in an analogous manner to that in Example 14 with the amounts and conditions shown in Table 4.

### Example 18: Synthesis of mixed ligand methoxy(ethoxy)acetate-acetate-alumoxane.

Prepared in an analogous manner to that in Example 14 with the amounts and conditions shown in Table 4.

### Example 19: Synthesis of mixed ligand methoxy(ethoxy)acetate-acetate-alumoxane.

Prepared in an analogous manner to that in Example 14 with the amounts and conditions shown in Table 4.

### Example 20: Synthesis of mixed ligand methoxy(ethoxyethoxy)acetate-acetate-alumoxane.

Acetic acid (28.6 mL) and methoxy(ethoxyethoxy) acetic acid (76.7 mL) was dissolved in 500 mL of water and Vista Captal B boehmite (20 g) was slowly added and the solution was allowed to reflux for 72 hours. The solution was filtered and the filtrate was evaporated under reduced pressure resulting in a white/clear gel. The gel was dissolved in ethanol and the product was collected as a white powder upon the addition of diethyl ether. Yield: 25.4 g. The TGA of the product showed a 28.5 % ceramic yield (weight loss of 71.5%). The alumoxane was heated from 25 °C to 200 °C at the rate of 1.5 °C.min⁻¹, soaked for 2 h. at 200 °C, followed by a temperature ramp up to 1000 °C at the rate of 5 °C.min⁻¹, soaked for 2 h.

### Example 21: Synthesis of mixed ligand methoxy(ethoxyethoxy)acetate-acetate-alumoxane.

Prepared in an analogous manner to that in Example 20 with the amounts and conditions shown in Table 5.

### Example 22: Physical Mixing of methoxy(ethoxy)acetate-alumoxane (MEA-A) and acetate-alumoxane (A-A).

MEA-A (1.0 g) and A-A (1.0 g) were dissolved into about 20 mL of water. After stirring for approximately 0.5 hours the solutions were poured into drying containers. After approximately 36 hours, the solutions had evaporated to leave a thin membrane which is glass-like. The glassy membrane is then fired as described in example 2.

### Example 23: Physical Mixing of methoxy(ethoxy)acetate-alumoxane (MEA-A) and acetate-alumoxane (A-A).

Prepared in an analogous manner to that in Example 22 with the amounts and conditions shown in Table 6.

### Example 24: Physical Mixing of methoxy(ethoxy)acetate-alumoxane (MEA-A) and acetate-alumoxane (A-A).

Prepared in an analogous manner to that in Example 22 with the amounts and conditions shown in Table 6.

### Example 25: Physical Mixing of methoxy(ethoxy)acetate-alumoxane (MEA-A) and acetate-alumoxane (A-A).

Prepared in an analogous manner to that in Example 22 with the amounts and conditions shown in Table 6.

### Example 26: Physical Mixing of chemically mixed methoxy(ethoxyethoxy)acetate-acetate-alumoxane (MEA/A-A) and acetate-alumoxane (A-A).

MEA/A-A (1.0 g) and A-A (1.0 g) were dissolved into 20 mL of water. After stirring for approximately 0.5 hours the solutions were poured into drying containers. After approximately 36 hours, the solutions had evaporated to leave a thin membrane which is glass-like. The glassy membrane is then fired by the conditions listed in Example 2.

### Example 27: Physical Mixing of chemically mixed methoxy(ethoxyethoxy)acetate-acetate-alumoxane (MEA/A-A) and acetate-alumoxane (A-A).

Prepared in an analogous manner to that in Example 26 with the amounts and conditions shown in Table 7.

### Example 28: Physical Mixing of chemically mixed methoxy(ethoxyethoxy)acetate-acetate-alumoxane (MEA/A-A) and acetate-alumoxane (A-A).

Prepared in an analogous manner to that in Example 26 with the amounts and conditions shown in Table 7.

### Example 29: Physical Mixing of chemically mixed methoxy(ethoxyethoxy)acetate-acetate-alumoxane (MEA/A-A) and acetate-alumoxane (A-A).

Prepared in an analogous manner to that in Example 26 with the amounts and conditions shown in Table 7.

### Example 30: Physical Mixing of chemically mixed methoxy(ethoxyethoxy)acetate-acetate-alumoxane (MEA/A-A) and acetate-alumoxane (A-A).

Prepared in an analogous manner to that in Example 26 with the amounts and conditions shown in Table 7.

### Example 31. Infiltration of alumino-silicate filters.

A filter frit (pore size ca. 25 µm) was placed in a Schleck flask and evacuated. A solution of A-A (10 g) in 100 mL of water was introduced into the Schlenk by canula under vacuum which resulted in the ceramic frit "soaking up" the alumoxane solution. The frit was allowed to sit for approximately 0.5 hours under reduced pressure with an excess of the alumoxane solution covering the frit in the schlenk. The frit was then allowed to dry at room temperature. The frit was then either infiltrated again, fired, or fired then infiltrated again.

### Example 32. Infiltration of alumino-silicate filters.

Prepared in an analogous manner to that in Example 31 with the number of infiltrations (# dips) and firing sequence shown in Table 9.

### Example 33. Infiltration of alumino-silicate filters.

Prepared in an analogous manner to that in Example 31 with the number of infiltrations (# dips) and firing sequence shown in Table 9.

### Example 34. Infiltration of alumino-silicate filters.

Prepared in an analogous manner to that in Example 31 with the number of infiltrations (# dips) and firing sequence shown in Table 9.

### Example 35. Infiltration of alumino-silicate filters.

Prepared in an analogous manner to that in Example 31 with the number of infiltrations (# dips) and firing sequence shown in Table 9.

### Example 36. Infiltration of alumino-silicate filters.

Prepared in an analogous manner to that in Example 31 with the number of infiltrations (# dips) and firing sequence shown in Table 9.

### Example 37. Infiltration of alumino-silicate filters.

Prepared in an analogous manner to that in Example 31 with the number of infiltrations (# dips) and firing sequence shown in Table 9.

### Example 38. Infiltration of alumino-silicate filters.

Prepared in an analogous manner to that in Example 31 with the number of infiltrations (# dips) and firing sequence shown in Table 9.

### Example 39. Infiltration of alumino-silicate filters.

Prepared in an analogous manner to that in Example 31 with the number of infiltrations (# dips) and firing sequence shown in Table 9.

### Example 40. Infiltration of alumino-silicate filters.

Prepared in an analogous manner to that in Example 31 with the number of infiltrations (# dips) and firing sequence shown in Table 9.

### Example 41. Infiltration of alumino-silicate filters.

Prepared in an analogous manner to that in Example 31 with the number of infiltrations (# dips) and firing sequence shown in Table 9.

### Example 42. Infiltration of alumino-silicate filters.

Prepared in an analogous manner to that in Example 31 with the number of infiltrations (# dips) and firing sequence shown in Table 9.

### Example 43. Infiltration of alumino-silicate filters.

Prepared in an analogous manner to that in Example 31 with the number of infiltrations (# dips) and firing sequence shown in Table 9.

### Example 44. Infiltration of glass filters.

A glass filter frit (pore size D) was placed in a Schleck flask and evacuated. A solution of A-A (10 g) in 100 mL of water was introduced into the Schlenk by canula under vacuum which resulted in the glass frit "soaking up" the alumoxane solution. The frit was allowed to sit for approximately 0.5 hours under reduced pressure with an excess of the alumoxane solution covering the frit in the schlenk. The frit was then allowed to dry at room temperature. The infiltration was repeated twice. The infiltrated glass frit was heated from 25 °C to 350 °C, analyzed by SEM, heated from 25 °C to 700 °C and analyzed.

### Example 45. Infiltration of glass filters.

Prepared in an analogous manner to that in Example 44 with the number of infiltrations (# dips) and firing sequence shown in Table 10.

### Example 46. Infiltration of glass filters.

Prepared in an analogous manner to that in Example 44 with the number of infiltrations (# dips) and firing sequence shown in Table 10.

### Example 47. Infiltration of glass filters.

Prepared in an analogous manner to that in Example 44 with the number of infiltrations (# dips) and firing sequence shown in Table 10.

### Example 48. Preparation of alumina coated carbon fibers.

MEEA-alumoxane (0.1 g) was dissolved in CHCl₃ (5 mL) at room temperature. The fiber is dipped in MEEA-alumoxane solution and allowed to fully air dry, at room temperature. Repeat dipping/drying until desired coating thickness is obtained. The coated fiber was heated from 25 °C to 225 °C at the rate of 1 °C.min⁻¹, soaked for 30 mins. at 225 °C, followed by a temperature ramp up to 300 °C at the rate of 2 °C.min⁻¹, and soaked for 80 mins., with a final ramp to the maximum temperature of 1100 °C (over 360 minutes) which was then maintained for 400 minutes.

### Example 49. Preparation of alumina coated carbon fibers.

Prepared in an analogous manner to that in Example 48 using the amounts and conditions shown in Table 11.

### Example 50. Preparation of alumina coated carbon fibers.

Prepared in an analogous manner to that in Example 48 using the amounts and conditions shown in Table 11.

### Example 51. Preparation of alumina coated carbon fibers.

Prepared in an analogous manner to that in Example 48 using the amounts and conditions shown in Table 11.

### Example 52. Preparation of alumina coated carbon fibers.

Prepared in an analogous manner to that in Example 48 using the amounts and conditions shown in Table 11.

### Example 53. Preparation of alumina coated carbon fibers.

MEEA-alumoxane (0.1 g) was dissolved in H₂O (5 mL) with low heat (40 °C) and stirring. The fiber is dipped in MEEA-Alumoxane solution and allowed to partially dry at room temperature then dried in oven (45° C) for 24h. Repeat dipping/drying until desired coating thickness is obtained. The coated fiber was heated from 25 °C to 225 °C at the rate of 1 °C.min⁻¹, soaked for 30 mins. at 225 °C, followed by a temperature ramp up to 300 °C at the rate of 2 °C.min⁻¹, and soaked for 80 mins., with a final ramp to the maximum temperature of 1100 °C (over 360 minutes) which was then maintained for 400 minutes.

### Example 54. Preparation of alumina coated carbon fibers.

Prepared in an analogous manner to that in Example 53 using the amounts and conditions shown in Table 11.

### Example 55. Preparation of alumina coated carbon fibers.

Prepared in an analogous manner to that in Example 53 using the amounts and conditions shown in Table 11.

### Example 56. Preparation of alumina coated carbon fibers.

Prepared in an analogous manner to that in Example 53 using the amounts and conditions shown in Table 11.

### Example 57. Preparation of alumina coated carbon fibers.

Prepared in an analogous manner to that in Example 53 using the amounts and conditions shown in Table 11.

### Example 58. Preparation of YAG coated carbon fibers.

Yttrium-doped MEEA-alumoxane (0.5 g) was dissolved in H₂O (5 mL) with low heat (40 °C) and stirring. The fiber is dipped in the Y-doped MEEA-alumoxane solution and allowed to partially dry at room temperature then dried in oven (45° C) for 24h. Repeat dipping/drying until desired coating thickness is obtained. The coated fiber was heated from 25 °C to 225 °C at the rate of 1 °C.min⁻¹, soaked for 30 mins. at 225 °C, followed by a temperature ramp up to 300 °C at the rate of 2 °C.min⁻¹, and soaked for 80 mins., with a final ramp to the maximum temperature of 1100 °C (over 360 minutes) which was then maintained for 400 minutes.

### Example 59. Preparation of YAG coated carbon fibers.

Prepared in an analogous manner to that in Example 58 using the amounts and conditions shown in Table 11.

### Example 60. Preparation of YAG coated carbon fibers.

Prepared in an analogous manner to that in Example 58 using the amounts and conditions shown in Table 11.

### Example 61. Preparation of hibonite coated carbon fibers.

Calcium-doped MEEA-alumoxane (0.5 g) was dissolved in H₂O (5 mL) with low heat (40 °C) and stirring. The fiber is dipped in the Ca-doped MEEA-alumoxane solution and allowed to partially dry at room temperature then dried in oven (45° C) for 24h. Repeat dipping/drying until desired coating thickness is obtained. The coated fiber was heated from 25 °C to 225 °C at the rate of 1 °C.min⁻¹, soaked for 30 mins. at 225 °C, followed by a temperature ramp up to 300 °C at the rate of 2 °C.min⁻¹, and soaked for 80 mins., with a final ramp to the maximum temperature of 1100 °C (over 360 minutes) which was then maintained for 400 minutes.

### Example 62. Preparation of hibonite coated carbon fibers.

Prepared in an analogous manner to that in Example 61 using the amounts and conditions shown in Table 11.

### Example 63. Preparation of hibonite coated carbon fibers.

Prepared in an analogous manner to that in Example 61 using the amounts and conditions shown in Table 11.

### Example 64. Preparation of hibonite coated carbon fibers.

Calcium-doped MEEA-alumoxane (0.1 g) was dissolved in CHCl₃ (5 mL) at room temperature. The fiber is dipped in Ca-doped MEEA-alumoxane solution and allowed to fully air dry, at room temperature. Repeat dipping/drying until desired coating thickness is obtained. The coated fiber was heated from 25 °C to 225 °C at the rate of 1 °C.min⁻¹, soaked for 30 mins. at 225 °C, followed by a temperature ramp up to 300 °C at the rate of 2 °C.min⁻¹, and soaked for 80 mins., with a final ramp to the maximum temperature of 1100 °C (over 360 minutes) which was then maintained for 400 minutes.

### Example 65. Preparation of hibonite coated carbon fibers.

Prepared in an analogous manner to that in Example 61 using the amounts and conditions shown in Table 11.

### Example 66. Preparation of hibonite coated carbon fibers.

Prepared in an analogous manner to that in Example 61 using the amounts and conditions shown in Table 11.

### Example 67. Preparation of hibonite silicon carbide fibers.

Calcium-doped MEA-alumoxane (0.1 g) was dissolved in CHCl₃ (5 mL) at room temperature. The SiC fiber was cleaned with acetone and dipped in a Ca-doped MEA-alumoxane solution and allowed to fully air dry, at room temperature. Repeat dipping/drying until desired coating thickness is obtained. The coated fiber was heated from 25 °C to 225 °C at the rate of 1 °C.min⁻¹, soaked for 30 mins. at 225 °C, followed by a temperature ramp up to 300 °C at the rate of 2 °C.min⁻¹, and soaked for 80 mins., with a final ramp to the maximum temperature of 1100 °C (over 360 minutes) which was then maintained for 400 minutes.

### Example 68. Preparation of hibonite coated silicon carbide fibers.

Prepared in an analogous manner to that in Example 67 using the amounts and conditions shown in Table 12.

### Example 69. Preparation of hibonite coated silicon carbide fibers.

Prepared in an analogous manner to that in Example 67 using the amounts and conditions shown in Table 12.

### Example 70. Preparation of hibonite coated silicon carbide fibers.

Prepared in an analogous manner to that in Example 67 using the amounts and conditions shown in Table 12.

### Example 71. Preparation of hibonite coated silicon carbide fibers.

Prepared in an analogous manner to that in Example 67 using the amounts and conditions shown in Table 12.

### Example 72. Preparation of hibonite coated silicon carbide fibers.

Prepared in an analogous manner to that in Example 67 using the amounts and conditions shown in Table 12.

### Example 73. Preparation of hibonite coated silicon carbide fibers.

Prepared in an analogous manner to that in Example 67 using the amounts and conditions shown in Table 12.

### Example 74. Preparation of hibonite silicon carbide fibers.

Calcium-doped MEA-alumoxane (0.5 g) was dissolved in H₂O (5 mL) with low heat (40°C) and stirring. The fiber is cleaned with acetone and dipped in a metal-doped MEA-alumoxane solution and allowed to partially dry at room temperature then dried in oven (45° C) for 24 h. Repeat dipping/drying until desired coating thickness is obtained. The coated fiber was heated from 25 °C to 225 °C at the rate of 1 °C.min⁻¹, soaked for 30 mins. at 225 °C, followed by a temperature ramp up to 300 °C at the rate of 2 °C.min⁻¹, and soaked for 80 mins., with a final ramp to the maximum temperature of 1100 °C (over 360 minutes) which was then maintained for 400 minutes.

### Example 75. Preparation of hibonite coated silicon carbide fibers.

Prepared in an analogous manner to that in Example 74 using the amounts and conditions shown in Table 12.

### Example 76. Preparation of hibonite coated silicon carbide fibers.

Prepared in an analogous manner to that in Example 74 using the amounts and conditions shown in Table 12.

### Example 77. Preparation of hibonite coated silicon carbide fibers.

Prepared in an analogous manner to that in Example 74 using the amounts and conditions shown in Table 12.

### Example 78. Preparation of hibonite coated silicon carbide fibers.

Prepared in an analogous manner to that in Example 74 using the amounts and conditions shown in Table 12.

### Example 79. Preparation of hibonite sapphire fibers.

Calcium-doped MEA-alumoxane (0.1 g) was dissolved in CHCl₃ (5 mL) at room temperature. The sapphire fiber was cleaned with acetone and dipped in a Ca-doped MEA-alumoxane solution and allowed to fully air dry, at room temperature. Repeat dipping/drying until desired coating thickness is obtained. The coated fiber was heated from 25 °C to 225 °C at the rate of 1 °C.min⁻¹, soaked for 30 mins. at 225 °C, followed by a temperature ramp up to 300 °C at the rate of 2 °C.min⁻¹, and soaked for 80 mins., with a final ramp to the maximum temperature of 1100 °C (over 360 minutes) which was then maintained for 400 minutes.

### Example 80. Preparation of hibonite coated sapphire fibers.

Prepared in an analogous manner to that in Example 79 using the amounts and conditions shown in Table 13.

### Example 81. Preparation of hibonite coated sapphire fibers.

Prepared in an analogous manner to that in Example 79 using the amounts and conditions shown in Table 13.

### Example 82. Preparation of hibonite coated sapphire fibers.

Prepared in an analogous manner to that in Example 79 using the amounts and conditions shown in Table 13.

### Example 83. Preparation of hibonite coated sapphire fibers.

Prepared in an analogous manner to that in Example 79 using the amounts and conditions shown in Table 13.

### Example 84. Preparation of hibonite coated sapphire fibers.

Prepared in an analogous manner to that in Example 79 using the amounts and conditions shown in Table 13.

### Example 85. Preparation of hibonite coated sapphire fibers.

Prepared in an analogous manner to that in Example 79 using the amounts and conditions shown in Table 13.

### Example 86. Preparation of hibonite sapphire fibers.

Calcium-doped MEA-alumoxane (0.5 g) was dissolved in H₂O (5 mL) with low heat (40°C) and stirring. The fiber is cleaned with acetone and dipped in a metal-doped MEA-alumoxane solution and allowed to dry at room temperature. Repeat dipping/drying until desired coating thickness is obtained. The coated fiber was heated from 25 °C to 225 °C at the rate of 1 °C.min⁻¹, soaked for 30 mins. at 225 °C, followed by a temperature ramp up to 300 °C at the rate of 2 °C.min⁻¹, and soaked for 80 mins., with a final ramp to the maximum temperature of 1100 °C (over 360 minutes) which was then maintained for 400 minutes.

### Example 87. Preparation of hibonite coated sapphire fibers.

Prepared in an analogous manner to that in Example 86 using the amounts and conditions shown in Table 13.

### Example 88. Preparation of hibonite coated sapphire fibers.

Prepared in an analogous manner to that in Example 86 using the amounts and conditions shown in Table 13.

### Example 89. Preparation of hibonite coated sapphire fibers.

Prepared in an analogous manner to that in Example 86 using the amounts and conditions shown in Table 13.

### Example 90. Preparation of hibonite coated sapphire fibers.

Prepared in an analogous manner to that in Example 86 using the amounts and conditions shown in Table 13.

### REFERENCES

**The following are incorporated herein in their entirety for all purposes:**
Adkins, A., *J. Am. Chem. Soc.,* **44,** 2175 (1922).
Anderson, M. A.; Gieselman, M. L.; Xu, *Q., J. Membrane Sci.,* **39,** 243 (1988).
Andrianov K. A.; Zhadanov, A. A., *J. Polym. Sci*, **30,** 513 (1958).
Apblett, A. W.; Warren, A. C.; Barron, A. R., *Chem. Mater*., **4,** 167 (1992).
Baker, R. W., *Membrane Separation Systems: Recent Developments and Future Directions,*
Noyes Data Corp., Park Ridge, NJ (1991).
Baltus, *J. Mater. Sci*., **123,** 165 (1997).
Callender, R.L., Harlan, C.J., Shapiro, N.M., Jones, C.D., Callahan, D.L., Wiesner, M.R.,
MacQueen, D.B., Cook, R., Barron, A.R., *Chem. Mater*., **9,** 2418 (1997).
Courtright, E. L., *Ceramic Engineering and Science Proceedings,* **12,** 1725 (1991).
Elaloui, E.; Pierre, A. C.; Pajonk, G. M., *J. Catalysis,* **166,** 340 (1997).
Furneaux, R. D.; Rigby, W. R.; Davidson, A. P., *Nature,* **337,** 147 (1989).
Green R. H.; Hem, S. L., *J. Pharm. Sci,* **63,** 635 (1974).
Hsieh H. D. in *New Membrane Materials and Processes for Separation,* Ed. K. K. Sirkar and D. ' R. Lloyd, American Institute of Chemical Engineering, New York, Vol. 84 (1988).
Kareiva, A.; Harlan, C. J.; MacQueen, D. B.; Cook, R.; Barron, A. R., *Chem. Mater*., **8,** 2331 (1996).
Kim, K. J.; Stevens, P. V., *J. Membrane Sci.,* **123,** 303 (1997).
Kingery, W. D.; Bowen, H. K.; Uhlmann, D. R. *Introduction to Ceramics,* 2nd Ed. Wiley, New York, Chapter 1 (1976).
Landry, C. C.; Davis, J. A.; Apblett, A. W.; Barron, A. R., *J. Mater. Chem.,* **3,** 597 (1993).
Landry, C. C.; Pappè, N.; Mason, M. R.; Apblett, A. W.; Tyler, A. N.; MacInnes, A. N.; Barron, A. R., *J. Mater. Chem*., **5,** 331 (1995).
Lao, H.; Detellier, C.; Matsuura, T.; Tremblay, A. Y., *J*. *Mater. Sci. Letters,* **13,** 895 (1994).
Lin, Y. S.; de Vries, K. J.; Burggraaf, A. J., *J. Mater. Sci.,* **26,** 715 (1991).
Low, I. M.; Suherman, P. M.; Rhillips, P. N., *J. Mater. Sci. Letters,* **16,** 982 (1997).
Michalke T. A.; Hellmann, T. R., *J. Am. Ceram. Soc.,* **71,** 725 (1988).
Nikolic, L.; Radonjic, L., *Thin Solid Films,* **295,** 101 (1997).
Nogami, M., *J. Non-Cryst. Solids.,* **178,** 320 (1994).
Okubo, T.; Watanabe, M.; Kusakabe, K.; Morooka, S., *J. Mater. Sci.,* **25,** 4822 (1990).
Rezgui, S; Gates, B. C., *J. Non-Cryst. Solids.,* **210,** 287 (1997).
Rezgui, S; Gates, B. C.; Burkett, S. L.; Davis, M. E., *Chem. Mater.,* **6,** 2390 (1994).
Richerson, D. W., *Modern Ceramic Engineering,* Marcel Dekker, New York, p 373 (1992).
Serna, C. J.; White, J. L.; Hem, S. L., *Soil. Sci., 41, 1009* (1977).
Shelleman, R. A.; Messing, G. L.; Kumagai, M., *J. Non-Cryst. Solids,* **82,** 277 (1986).
Teichner, S. J.; Nicolaon, G. A.; Vicarini, M. A.; Gardes, G. E. E., *Adv. Coll. Interf. Sci.,* **5,** 245 (1976).
Wilson, S. J.; Stacey, M. H., *J. Colloid Interface Sci.,* **82,** 507 (1981).
Yoldas, B. E., *J. Mat. Sci*., **10,** 1856 (1975).
Zaspalis, V. T.; van Praag, W.; Keizer, K.; Ross, J. R. H.; Burggraaf, A. J., *J. Mater. Sci.,* **27,** 1023 (1992).

## Claims

1. A method of controlling the porosity and pore size distribution of ceramic bodies comprising
reacting boehmite with a carboxylic acid to produce carboxylate-alumoxane nanoparticles,
drying the carboxylate-alumoxane nano-particles,
re-dissolving the carboxylate-alumoxane nano-particles in a solvent,
drying the nano-particles,
firing the dried nano-particles at a temperature greater than 300 °C.

2. The method of claim 1 wherein the boehmite is pseudo-boehmite.

3. The method of claim 1 wherein the ceramic body comprises the thermolysis product of a carboxylate-alumoxane represented by the formula [Al(O)ₓ(OH)_{y}(O₂CR)_{z}]ₙ, wherein x is from 0 to 1.5, y is from 0 to 3, z is from 0 to 3, n is greater than 6, and R is hydrogen or an organic group.

4. The method of claim 3 wherein each R, which may be the same or different, is hydrogen or an organic group selected from the group consisting of alkyl, alkenyl, aromatic, haloalkyl, haloalkenyl, and haloaromatic groups or alkyl, alkenyl, and aromatic ether groups or an organic group containing a hetero-atom including, oxygen, nitrogen, sulfur, phosphorous.

5. The method of claim 3 wherein the carboxylate is derived from a carboxylic acid selected from the group consisting of acetic acid, methoxyacetic acid, methoxyethoxyacetic acid, and methoxyethoxyethoxyacetic acid.

6. The method of claim 5 wherein the carboxylate-alumoxane is the reaction product of a carboxylic acid and boehmite.

7. The method of claim 5 wherein the carboxylate-alumoxane is the reaction product of a carboxylic acid and pseudo-boehmite.

8. The method of claim 5 wherein the carboxylate-alumoxane is the reaction product of two or more carboxylic acids and boehmite.

9. The method of claim 8 wherein the carboxylate-alumoxane is the reaction product of the sequential or parallel reaction of two or more carboxylic acids with boehmite.

10. The method of claim 8 wherein the carboxylate-alumoxane is the reaction product of the sequential reaction of a first carboxylic acid with boehmite or pseudo-boechmite to make a product, followed by the reaction of said product with a second carboxylic acid.

11. The method of claim 8 wherein the carboxylate-alumoxane is the reaction product of two or more carboxylic acids and pseudo-boehmite.

12. The method of claim 1, further comprising introducing the dissolved carboxylate-alumoxane nano-particles to a ceramic support.

13. The method of claim 12 wherein drying of the nano-particles takes place on the support.

14. The method of claim 13 wherein the support comprises a mold.

15. The method of claim 14 wherein the mold comprises a porous material.

16. The method of claim 15 wherein the porous material comprises a filter.

17. The method of claim 16 wherein the filter comprises a frit.

18. The method of claim 1 wherein the solvent comprises water.

19. The method of claim 1 wherein the ceramic body comprises a membrane.

20. The method of claim 1 further comprising infiltrating the dissolved carboxylate-alumoxane nano-particles to a ceramic support

21. The method of claim 1 further comprising mixing two or more carboxylic acids prior to reacting boehmite with a carboxylic acid to produce carboxylate-alumoxane nanoparticles.

22. The method of claim 1 further comprising reacting boehmite sequentially with two or more carboxylic acids.

23. The method of claim 1 further comprising dip-coating a fiber in the mixture of redissolved carboxylate-alumoxane nano-particles and solvent.

24. The method of claim 23 wherein the fiber comprises a carbon fiber, a silicon carbide fiber, a kevlar fiber, a sapphire fiber, a monofilant fiber, or a woven cloth.

25. The method of claim 23 wherein the dried nano-particles are fired at a temperature sufficient to drive off the volatiles.

26. The method of claim 23 wherein the dried nano-particles are fired at a temperature sufficient to drive off the organics.

27. The method of claim 1 wherein the dried nano-particles are fired slowly at a temperature sufficient to burn off organic constituents.

28. The method of claim 1 wherein the dried nano-particles are fired at a temperature between 25 °C and 225 °C.

29. The method of claim 28 further comprising holding the nano-particles at a temperature of 225 °C for 30 minutes.

30. The method of claim 28 wherein the nano-particles are fired at a temperature that is ramped from 25 °C to 225 °C at a rate of 1 °C per minute.

31. The method of claim 30 further comprising holding the nano-particles at a temperature of 225 °C for 30 minutes.

32. The method of claim 1 further comprising holding the nano-particles at a temperature of 300 °C for 80 minutes.

33. The method of claim 1 further comprising firing the nano-particles by ramping the temperature to 1100 °C at a rate of 2 °C per minute.

34. The method of claim 33 further comprising holding the nano-particles at a temperature of 1100 °C for 400 minutes.

35. The method of claim 1 further comprising cooling the nano-particles slowly to room temperature.
